(19) Europäisches Patentamt
European Patent Office
Office européen des brevets

(11) EP 2 571 090 B1

(12) **EUROPEAN PATENT SPECIFICATION**

(45) Date of publication and mention of the grant of the patent:
**07.09.2016 Bulletin 2016/36**

(21) Application number: **11780669.5**

(22) Date of filing: **12.05.2011**

(51) Int Cl.:
***H01M 10/0567*** *(2010.01)* ***H01M 4/587*** *(2010.01)*
***H01M 10/052*** *(2010.01)* ***H01M 10/0525*** *(2010.01)*
***H01M 10/0568*** *(2010.01)* ***H01M 10/0569*** *(2010.01)*
***H01M 10/056*** *(2010.01)*

(86) International application number:
**PCT/JP2011/060928**

(87) International publication number:
**WO 2011/142412 (17.11.2011 Gazette 2011/46)**

(54) **NONAQUEOUS-ELECTROLYTE SECONDARY BATTERY**

SEKUNDÄRBATTERIE MIT NICHTWÄSSRIGEM ELEKTROLYT

ACCUMULATEUR SECONDAIRE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2010 JP 2010244343**
**28.09.2010 JP 2010217363**
**28.07.2010 JP 2010169176**
**12.05.2010 JP 2010110398**

(43) Date of publication of application:
**20.03.2013 Bulletin 2013/12**

(73) Proprietor: **Mitsubishi Chemical Corporation**
**Chiyoda-ku**
**Tokyo 100-8251 (JP)**

(72) Inventors:
- **TOKUDA, Hiroyuki**
  **Yokohama-shi Kanagawa 227-8502 (JP)**
- **FUKAMIZU, Koji**
  **Inashiki -gun Ibaraki 300-0332 (JP)**
- **KOTATO, Minoru**
  **Inashiki-gun, Ibaraki 300-0332 (JP)**
- **FUSE, Tooru**
  **Inashiki-gun Ibaraki 300-0332 (JP)**
- **HOSOKAWA, Akemi**
  **Yokohama-shi Kanagawa 227-8502 (JP)**
- **SAWA, Shuhei**
  **Inashiki-gun Ibaraki 300-0332 (JP)**
- **OHASHI, Youichi**
  **Inashiki-gun Ibaraki 300-0332 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 758 198**
**JP-A- 2000 106 183**
**JP-A- 2000 106 183**
**JP-A- 2002 100 399**
**JP-A- 2002 110 234**
**JP-A- 2002 124 297**
**JP-A- 2003 100 294**
**JP-A- 2003 100 294**
**JP-A- 2003 203 630**
**JP-A- 2007 242 496**
**JP-A- 2007 242 496**
**JP-A- 2007 305 625**
**JP-A- 2008 091 236**
**JP-A- 2009 302 058**
**US-A1- 2006 240 329**
**US-A1- 2009 053 598**
**US-B1- 6 479 191**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 571 090 B1

## Description

### TECHNICAL FIELD

The present invention relates to a nonaqueous electrolyte secondary battery, and more particularly, to a nonaqueous electrolyte secondary battery that comprises a nonaqueous electrolyte solution that contains, as an electrolyte, a specific cyclic compound having a triple bond, and, in a negative electrode, a negative electrode active material that is made of graphite having a rhombohedral rate with a specific proportion.

### BACKGROUND ART

Nonaqueous electrolyte secondary batteries, such as lithium secondary batteries, are being used as a wide variety of power sources, ranging from power sources for so-called portable electronic devices such as mobile phones and notebooks, to large stationary power sources as well as automotive power sources for driving, in automobiles or the like. However, the demands placed on the secondary batteries that are used have become ever more challenging in recent years, accompanying the higher performances of electronic devices and the growing use of secondary batteries as automotive power sources for driving and as large stationary power sources. It is now required that the characteristics of secondary batteries afford high battery performance levels in terms of, for instance, higher capacity, and improved high-temperature storage characteristic and cycle characteristic.

Ordinarily, the electrolyte solutions that are used in nonaqueous electrolyte solution lithium secondary batteries are mainly made up of an electrolyte and a nonaqueous solvent. Examples of the main component of the nonaqueous solvent include, for instance, cyclic carbonates such as ethylene carbonate or propylene carbonate; linear carbonates such as dimethyl carbonate, diethyl carbonate or ethyl methyl carbonate; and cyclic carboxylic acid esters such as γ-butyrolactone, γ-valerolactone or the like.

Various nonaqueous solvents, electrolytes and additives, such as auxiliary agents, have been proposed in order to improve battery characteristics such as the load characteristic, cycle characteristic, storage characteristic and low-temperature characteristic of the battery in which the nonaqueous electrolyte solution is used. For instance, Patent Documents 1 and 2 disclose nonaqueous electrolytes that utilize a carbon material in a negative electrode active material, wherein a good coating film is formed, on the surface of the negative electrode, through a preferential reaction of a cyclic carbonate having a double bond with the negative electrode, by using a vinylene carbonate and derivatives thereof, or vinylethylene carbonate derivatives.

Patent Document 3 discloses a nonaqueous electrolyte that utilizes artificial graphite in the negative electrode active material, wherein gas generation is reduced, and cycle characteristic improved, through the concomitant use of a specific ethylene carbonate derivative and a triple bond-containing compound and/or a pentafluorophenyloxy compound.

Patent Document 4 relates to an electrolyte for a lithium secondary battery comprising (i) a non-aqueous solvent, (ii) an electrolyte salt, and (iii) an alkyne derivative or an alkyne carbonate derivative.

Patent Document 5 describes a nonaqueous electrolyte secondary battery having an electrode capable of absorbing and releasing lithium and an electrolyte, wherein the electrolyte contains a cyclic carbonate derivative such as vinylene carbonate, vinylethylene carbonate, ethynylethylene carbonate, divinylethylene carbonate, or vinyloxyethylene carbonate, and a vinyl ester derivative such as vinyl acetate or diketene.

Patent Document 6 relates to a nonaqueous electrolytic solution and a lithium secondary battery using said electrolytic solution, wherein the electrolytic solution comprises an electrolyte salt dissolved in a nonaqueous solvent as well as an ethylene carbonate derivative and a triple bond-containing compound and/or a pentafluorophenyloxy compound.

Patent Document 7 describes a nonaqueous electrolyte solution for use in a lithium secondary battery, said electrolyte solution being obtained by dissolving an electrolyte salt in a nonaqueous solvent and containing a carboxylate compound and a vinylene carbonate and/or 1,3-propane sultone.

Patent Document 8 concerns an electrolyte solution of electrolytes dissolved in a nonaqueous solvent and comprising at least a specific alkyne derivative.

Patent Document 9 describes a lithium secondary battery containing an electrolytic solution prepared by dissolving an electrolyte in a nonaqueous solvent and containing at least one kind of alkyne derivative in the electrolytic solution.

Patent Document 10 describes a lithium secondary battery comprising a positive electrode, a negative electrode and a non-aqueous electrolytic solution having an electrolyte dissolved in a non-aqueous solvent. The positive electrode is formed of a material containing a lithium composite oxide, the negative electrode is formed of a material containing graphite, and the non-aqueous solvent contains cyclic carbonate and chain carbonate, together with an alkoxybenzene derivative such 1,2,4-trimethoxybenzene and an alkyne derivative such methane sulfonic acid 2-propynyl.

Patent Document 11 relates to a non-flammable nonaqueous electrolyte solution having a lithium salt dissolved in a solvent containing a phosphate ester and comprising at least one additive compound selected from the groups of (a) vinylene carbonate compounds, (b) vinyl acetate compounds, alkyl methyl carbonate compounds and vinyl ethylene carbonate compounds, and (c) 2-pyrrolidinone compounds, cyclic alkyl compounds and cyclic pentanone compounds.
Patent Document 12 is directed to a nonaqueous electrolyte battery comprising a negative electrode active material formed from a carbonaceous material consisting of a graphite containing the rhombic system structure and being coated with a carbonaceous material containing no rhombic system structure.
Patent Document 13 relates to a nonaqueous secondary battery formed from graphite powder having a grain size of 100 pm or less and having 20% or less of the rhombohedral structure a negative electrode active material.

Patent Document 1: Japanese Patent Application Publication No. H8-45545
Patent Document 2: Japanese Patent Application Publication No. H4-87156
Patent Document 3: WO 2006-077763
Patent Document 4: US-A-6 479 191
Patent Document 5: JP-A-2007/242 496
Patent Document 6: US-A-2009/053 598
Patent Document 7: EP-A-1 758 198
Patent Document 8: JP-A-2002/100 399
Patent Document 9: JP-A-2002/124 297
Patent Document 10: JP-A-2002/110 234
Patent Document 11: US-A-2006/240 329
Patent Document 12: JP-A-2003/100 294
Patent Document 13: JP-A-2000/106 183

DISCLOSURE OF THE INVENTION

As mentioned above, the characteristics of lithium secondary batteries, specifically higher capacity and improved high-temperature storage characteristic, cycle characteristic and so forth, call for ongoing improvement given the relentless demand for higher performance in secondary batteries in recent years.
Against this background, Patent Documents 1 and 2 disclose the feature of enhancing battery durability in terms of, for instance, storage characteristic and cycle characteristic, through protection of the electrode surface, in a nonaqueous electrolyte secondary battery and that uses carbon in the negative electrode active material and uses, as a nonaqueous electrolyte, a cyclic carbonate having a double bond. However, problems arose in that carbon dioxide is generated through oxidative decomposition of an unsaturated cyclic carbonate or a derivative thereof, on the positive electrode, when the battery is left to stand at high temperature, in a charged state, or upon continuous charge-discharge cycles. Generation of carbon dioxide under such usage environments may trigger the operation of a safety valve of the battery, or may render the battery itself unusable on account of battery swelling or the like.
Oxidative decomposition of an unsaturated cyclic carbonate on the positive electrode is also problematic on account of generation of solid-state decomposition products, in addition to generation of carbon dioxide. Generation of such solid decomposition products may cause clogging of electrode layers and separators, and may inhibit lithium ion migration as a result. The solid decomposition products may also remain on the electrode active material surface, thereby inhibiting the intercalation and deintercalation reactions of the lithium ions. As a result, this may lead to a gradual drop in charge-discharge capacity during a continuous charge-discharge cycle, to a drop in charge-discharge capacity below the initial charge-discharge capacity, upon high-temperature storage of the battery or continuous charge-discharge cycles, or to a drop in load characteristic.
Oxidative decomposition of unsaturated cyclic carbonates on the positive electrode has become a particularly serious problem in the design of high-performance secondary batteries in recent years. Oxidative decomposition tends to become pronounced when the potential at which lithium becomes intercalated and deintercalated in the positive electrode active material rises above the redox potential of lithium. For instance, these oxidation reactions become particularly noticeable when the battery is operated at a higher voltage than 4.2 V, which is the battery voltage upon full charge of currently commercially-available secondary batteries.
Patent Document 3 discloses a nonaqueous electrolyte secondary battery in which artificial graphite is used in a negative electrode active material, and a triple bond-containing compound or the like is used as the nonaqueous electrolyte. The triple bond-containing compound or the like is used as a nonaqueous electrolyte in order to improve cycle characteristics; however, this is problematic in that the side-reactivity of the electrolyte solution is high, and the cycle characteristic is difficult to improve.
The present invention provides a nonaqueous electrolyte secondary battery that solves the above-described various problems that arise upon attempting to achieve the improvements in performance that have come to be required

of secondary batteries in recent years. In particular, the present invention provides a nonaqueous electrolyte secondary battery having improved load characteristic and improved durability properties in terms of cycling, storage and the like.

As a result of diligent research directed at solving the above problems, the inventors found that a nonaqueous electrolyte secondary battery having improved durability properties in terms of cycling, storage and the like could be realized by using, in the nonaqueous electrolyte secondary battery, a negative electrode that comprises a negative electrode active material made up of graphite particles having a rhombohedral rate ranging from 0% to 35%, and by virtue of nonaqueous electrolyte solution that comprises at least one type of compound selected from the group consisting of compounds represented by formula (2), and perfected the present invention on the basis of that finding.

The gist of the present invention is as follows. A nonaqueous electrolyte secondary battery that comprises a nonaqueous electrolyte solution that contains a lithium salt and a nonaqueous solvent that dissolves the lithium salt, a negative electrode capable of absorbing and releasing lithium ions, and a positive electrode, wherein the negative electrode contains a negative electrode active material made up of graphite particles having a rhombohedral rate ranging from 0% to 35%, and the nonaqueous electrolyte solution contains a compound represented by formula (2) defined below.

In another aspect of the present invention, an aspect ratio of the graphite particles ranges from 0.05 to 20.

In another aspect of the present invention, an interlayer distance d002 of the graphite particles ranges from 0.335 nm to 0.339 nm.

In another aspect of the present invention, the graphite particles contain one or more types selected from the group consisting of graphite particles in which core graphite is covered with carbon, graphite particles in which core graphite is covered with graphite, and natural graphite particles.

In another aspect of the present invention, the negative electrode includes a negative electrode active material that contains at least one type of a carbonaceous material having a Raman R value of 0.1 or greater, which is defined as the ratio of peak intensity at 1360 $cm^{-1}$ with respect to peak intensity at 1580 $cm^{-1}$ in argon-ion laser Raman spectroscopy.

In the present invention, the compound represented by formula (2) is defined follows:

[Chem. 2]

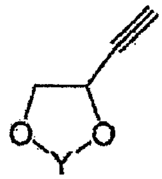

(2)

(Y represents a group selected from C=O, S=O, $S(=O)_2$, $P(=O)-R^2$ and $P(=O)-OR^3$; $R^2$ is a C1 to C20 saturated aliphatic hydrocarbon group; $R^3$ is Li, $NR^4_4$ or a C1 to C20 saturated aliphatic hydrocarbon group; and $R^4$ are mutually identical or different C1 to C20 saturated aliphatic hydrocarbon groups.).

In another aspect of the present invention, the nonaqueous electrolyte solution contains a compound (A) represented by $Li\alpha XO_nF_m$ (where X is any element of groups 13, 15 and 16 in the second or third period of the periodic table, and $\alpha$ = 1 to 2, n = 1 to 3, m = 1 to 2).

In another aspect of the present invention, the nonaqueous electrolyte solution contains a compound (B) represented by formula (3):

[Chem. 3]

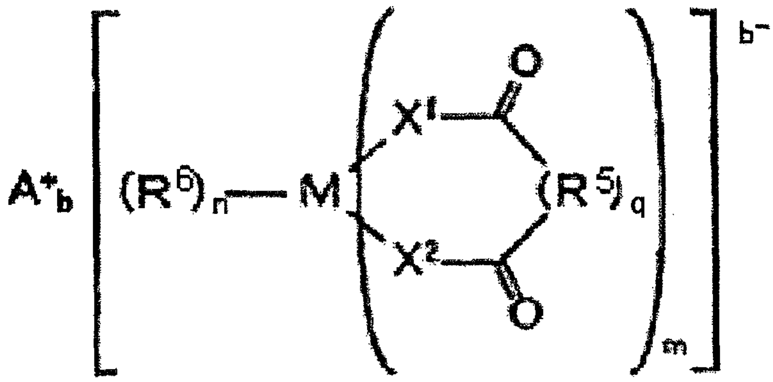

(3)

(In formula (3), A represents an alkali metal; M represents a transition metal or an element of groups 13, 14 or 15 of the periodic table; b ranges from 1 to 3, m ranges from 1 to 3, n ranges from 0 to 6, and q is 0 or 1; $R^5$ is a C1 to C10 alkylene, C1 to C10 halogenated alkylene, C6 to C20 arylene or C6 to C20 halogenated arylene ( $R^5$ that are present in a number m may be bonded to each other); $R^6$ is a halogen, a C1 to C10 alkyl, C1 to C10 halogenated alkyl, C6 to C20 aryl, C6 to C20 halogenated aryl, or $X^3R^7$ ($R^6$ that are present in a number n may be bonded to each other to form a ring); $X^1$, $X^2$ and $X^3$ are O, S or $NR^8$; and $R^7$ and $R^8$ are each independently hydrogen, a C1 to C10 alkyl, C1 to C10 halogenated alkyl, C6 to C20 aryl or C6 to C20 halogenated aryl ( $R^7$ and $R^8$ that are present in plurality may be bonded to each other to form a ring).).

In another aspect of the present invention, the nonaqueous electrolyte solution contains a carbonate (C) having at least one of a carbon-carbon unsaturated bond and a fluorine atom.

The present invention succeeds in providing a nonaqueous electrolyte battery having improved durability properties in terms of cycling, storage and the like, in the design, in particular, of lithium secondary batteries of higher capacity and for higher voltages. The reasons for this are deemed to be as follows.

One of the characterizing features of the present invention is that a compound in which a carbon-carbon triple bond is bonded to a ring structure via a single bond, and not via other functional group or heteroelement, is used in a nonaqueous electrolyte solution, and, in the nonaqueous electrolyte battery, a negative electrode is used that has a negative electrode active material made up of graphite particles having a rhombohedral rate ranging from 0% to 35%. As exemplified in Patent Documents 1 and 2, many materials that enhance battery durability, for instance in terms of storage characteristic and cycle characteristic, through protection of electrode surfaces, are compounds that have a cyclic structure and that have also multiple binding sites. Focusing on that feature, the inventors conducted detailed studies on binding sites of functional groups and heteroelements in a ring structure, on sites at which multiple bonds bind to a ring structure, and on the hybridization state of electron orbitals of multiple-bond moieties. As a result, the inventors found that compounds in which a multiple bond is bonded to a ring structure exhibit superior stability with the positive electrode than compounds in which part of the ring skeleton that makes up the cyclic compound is in the form of multiple bonds, and found that compounds in which a carbon-carbon triple-bond substituent is bonded to a ring structure form more readily a good coating film on the negative electrode surface than compounds in which a carbon-carbon double-bond substituent is bonded to a ring structure, such that, as a result, there is achieved a superior effect on battery durability properties. The above-described problem could thus be solved.

The film formation process that relies on decomposition, polymerization and the like of the cyclic compound comprising a carbon-carbon multiple bond, on the negative electrode surface, depends also on the properties of the negative electrode active material. Ordinarily, the most usual structure of the graphite particles is a hexagonal structure, but a rhombohedral structure exists also in a thermodynamically metastable state. It was found that a superior effect on battery durability properties is achieved when the proportion of rhombohedral crystals in graphite (rhombohedral rate) in graphite is no greater than 35%. The reasons for this are as yet unclear, but it is deemed that a protective coating, permeable to lithium ions, becomes stabilized through promotion of the polymerization of the compound of formula (2), and, in the negative electrode surface, side decomposition reactions elicited by electrolyte solution components other than the compound of formula (2) are suppressed, so that, as a result, a nonaqueous electrolyte battery is provided that, in particular, has improved durability properties in terms of cycling, storage and the like. That remarkable battery durability enhancement effect is not observed in the case of a linear compound, such as the one disclosed in Patent Document 3, to which a carbon-carbon triple bond is simply bonded (see, for instance, Example 14 and Comparative Example 13). Therefore, the battery durability enhancement effect is a distinctive feature of the compound represented by formula (2).

BEST MODE FOR CARRYING OUT THE INVENTION

Embodiments of the present invention are explained in detail next, but the present invention is not limited to these embodiments, and may be carried out in various ways

1. Negative electrode

The negative electrode used in the nonaqueous electrolyte secondary battery of the present invention is a negative electrode capable of absorbing and releasing lithium ions, and that comprises a specific negative electrode active material. The negative electrode active material that is used in the negative electrode is explained next.

<Negative electrode active material>

The negative electrode active material, which is one of the constituent elements of the present invention, is not particularly limited, so long as it is graphite particles having a rhombohedral rate ranging from 0% to 35%. The graphite particles having a rhombohedral rate ranging from 0% to 35% of the present invention are defined as follows.

(Graphite particles)

The graphite particles defined in the present invention are carbon having a d-value (interlayer distance), of lattice planes (002 planes), as determined by X-ray diffraction in accordance with the method by the Japan Society for Promotion of Scientific Research, that is ordinarily 0.335 nm or greater and smaller than 0.340 nm. Preferably, the d-value is 0.339 nm or smaller, and more preferably 0.337 nm or smaller. Crystallinity decreases, and initial irreversible capacity may increase, if the d-value is excessively great. Herein, 0.335 nm is a theoretical value for graphite.

Examples of graphite particles include, for instance, natural graphite particles and artificial graphite particles. Preferably, the graphite particles include one or more types selected from the group consisting of graphite particles in which core graphite is covered with carbon, graphite particles in which core graphite is covered with graphite, and natural graphite particles. Examples of natural graphite include, for instance, crystalline (vein) graphite, flake graphite, amorphous graphite or the like. Examples of artificial graphite include, for instance, graphitic particles such as coke, needle coke, high-density carbon materials or the like, produced as a result of a high-temperature thermal treatment of a pitch starting material. More preferably, the graphite is in the form of spheroidized natural graphite particles, in terms of low cost and ease of electrode production.

(Rhombohedral rate)

The rhombohedral rate defined in the present invention can be worked out, in accordance with the expression below, on the basis of the proportion of rhombohedral-structure graphite layers (ABC-stacking layers) and hexagonal-structure graphite layers (AB stacking layers) as measured by X-ray wide-angle diffraction (XRD).

$$\text{Rhombohedral rate (\%)} = \text{integrated intensity of ABC(101) peak by XRD} / \text{AB(101) peak integrated intensity by XRD} \times 100$$

The rhombohedral rate of the graphite particles of the present invention, is ordinarily 0% or greater, preferably greater than 0%, more preferably 3% or greater, yet more preferably 5% or greater, and particularly preferably 12% or greater, and ordinarily 35% or smaller, preferably 27% or smaller, more preferably 24% or smaller, a particularly preferably 20% or smaller. A rhombohedral rate of 0% denotes herein that no XRD peaks that derived from ABC-stacking layers are detected at all. A rhombohedral rate greater than 0% indicates that there is detected some XRD peak, even small, derived from ABC-stacking layers.

Too large a rhombohedral rate results in numerous defects in the crystalline structure of the graphite particles, and hence the Li intercalation amount tends to decrease, and high capacity tends to be harder to achieve. These defects give rise to decomposition of the electrolyte solution during cycling, as a result of which cycle characteristic tends to become poorer. Preferably, the rhombohedral rate lies within the range of the present invention, since in that case defects in the crystal structure of the carbonaceous material are few, reactivity with the electrolyte solution is low, consumption of electrolyte solution during cycling is low, and cycle characteristic is superior.

The XRD measurement method for working out the rhombohedral rate is as follows.

Specifically, a 0.2 mm sample plate is filled with graphite powder in such a manner that the graphite powder is

not oriented, followed by measurement using a X-ray diffraction device (for instance, X'Pert Pro MPD, by PANalytical, CuK$\alpha$ rays, output 45 kV, 40 mA). The integrated intensities of the peaks are calculated, using the obtained diffraction pattern, by profile-fitting according to an asymmetrical Pearson VII function, using analysis software JADE 5.0, to work out the rhombohedral rate on the basis of the abovementioned expression.

The X-ray diffraction measurement conditions are as follows. Herein, "2$\theta$" is the diffraction angle.

- Target: Cu(K$\alpha$ rays) graphite monochromator
- Slit:

    Soller slit: 0.04 degrees
    Divergent slit: 0.5 degrees
    Horizontal divergence mask: 15 mm
    Scattering-preventing slit: 1 degree

- Measurement range and step angle/measurement time:

    (101) plane: 41 degrees $\leq 2\theta \leq$ 47.5 degrees 0.3 degrees/60 seconds

- Background correction:

    Interval from 42.7 to 45.5 degrees joined by a straight line, and subtracted as background.

- Peak of rhombohedral-structure graphite particle layers: peak around of 43.4 degrees.
- Peak of hexagonal-structure graphite particle layers: peak around of 44.5 degrees.

The method for obtaining graphite particles having a rhombohedral rate that lies within the abovementioned range is not particularly limited, and may be a production method that relies on conventional techniques. Preferably, however, the graphite particles are produced as a result of a thermal treatment at a temperature of 500°C or higher. In particular, mechanical action in the form mainly of impact forces but also compression, friction, shear forces and the like, including interactions between particles, is exerted on the graphite particles. The rhombohedral rate can be adjusted by varying, for instance, the intensity of the mechanical action, the treatment time, or whether or not the treatment is repeated. Particularly preferred, as a specific apparatus for adjusting the rhombohedral rate, is a surface-treatment apparatus having a rotor, with multiple blades disposed thereon, inside a casing, and wherein mechanical action in the form of impact compression, friction, shearing forces and the like is exerted, through high-speed rotation of the rotor, onto the carbon material that is introduced into the apparatus. Preferably, the apparatus has a mechanism that repeatedly exerts a mechanical action on the carbon material, by causing the latter to circulate, or an apparatus having a mechanism wherein there is connected a plurality units that lack a circulation mechanism. Preferred examples of the apparatus include, for instance, a hybridization system by Nara Machinery Co., Ltd.

Preferably, a thermal treatment is additionally performed after imparting the mechanical action.

Particularly preferably, imparting of the mechanical action is followed by compositing with a carbon precursor and by a thermal treatment at a temperature of 700°C or higher.

(Specific form of the negative electrode active material)

Specific forms of the negative electrode active material include, for instance: (1) graphite particles comprising a composite and/or mixture of core graphite and carbon and having a rhombohedral rate ranging from 0% to 35%, (2) graphite particles comprising a composite and/or mixture of core graphite and graphite and having a rhombohedral rate ranging from 0% to 35%, (3) graphite particles having a rhombohedral rate ranging from 0% to 35%; and mixtures of (1) to (3).

Herein, examples of the core graphite include, for instance, the above-described natural graphite and artificial graphite. Preferably, the natural graphite as the core graphite is spheroidal natural graphite (in the present description, spheroidal natural graphite is also referred to as spheroidized graphite).

In a case of, for instance, a combination of (1) and (2), the proportion of the composite and/or mixture (2) with respect to the composite and/or mixture (1) is ordinarily 5 wt% or greater, preferably 10 wt% or greater, and more preferably 15 wt% or greater, and ordinarily 95 wt% or smaller, preferably 90 wt% or smaller and more preferably 85 wt% or smaller. If the mixing proportion of (2) is too small, irreversible capacity tends to increase and battery capacity to decrease, while if the mixing proportion is too large, Li acceptance at low temperature tends to decrease.

In a case, for instance, of a combination of (1) and (3), the proportion of graphite particles (3) with respect to

the composite and/or mixture (1) is ordinarily 5 wt% or greater, preferably 10 wt% or greater, and more preferably 15 wt% or greater, and ordinarily 70 wt% or smaller, preferably 60 wt% or smaller and more preferably 50 wt% or smaller. Too low a mixing proportion of (3) entails an increased press load upon pressing of the electrode to high density in order to increase battery capacity, and high density may be difficult to achieve. If the mixing proportion of (3) is too large, irreversible capacity may increase, and battery capacity may decrease.

In a case, for instance, of a combination of (2) and (3), the proportion of graphite particles (3) with respect to the composite and/or mixture (2) is ordinarily 5 wt% or greater, preferably 10 wt% or greater, and more preferably 20 wt% or greater, and ordinarily 70 wt% or smaller, preferably 60 wt% or smaller and more preferably 50 wt% or smaller. Too low a mixing proportion of (3) entails a trend towards increased press load upon pressing of the electrode to high density in order to increase battery capacity, and high density may be difficult to achieve. If the mixing proportion of (3) is too large, irreversible capacity tends to increase, and battery capacity to decrease.

Preferred combinations of the foregoing include, for instance, a combination of the composite (1) and the composite (2), a combination of the composite (1) and the graphite particles (3), and a combination of the composite (2) and the graphite particles (3). Herein, a combination of the composite (1) and the composite (2), and a combination of the composite (1) and the graphite particles (3), are more preferred, since in such a case a high-density electrode is easier to produce, conductive paths are secured easily, and the cycle characteristic is excellent.

The negative electrode according to the present invention may contain graphite particles having a rhombohedral rate which does not satisfy the above-described ranges. If the graphite particles are mixed with other graphite having a rhombohedral rate which lies outside the range from 0% to 35%, then the content of that other graphite is ordinarily 2 wt% or greater, preferably 5 wt% or greater and more preferably 10 wt% or greater, and ordinarily 50 wt% or smaller, preferably 45 wt% or smaller and more preferably 40 wt% or smaller, with respect to the weight of the graphite particles of the present invention. If the content of the other graphite is too low, the effect elicited by mixing the other graphite tends to be difficult to achieve, whereas if the content is too large, the effect of the present invention tends to become weakened.

In a case where the negative electrode active material comprises (1) and/or (2), then the rhombohedral rate of the core graphite that makes up these composites, like that of the graphite particles, is ordinarily 0% or greater, preferably 3% or greater, more preferably 5% or greater, and ordinarily 35% or smaller, preferably 27% or smaller, more preferably 24% or smaller, and particularly preferably 20% or smaller. The rhombohedral rate of the core graphite that makes up these composites can be worked out in accordance with the same method as for the above-described graphite particles.

(1) Graphite particles comprising a composite and/or mixture of core graphite and carbon and having a rhombohedral rate ranging from 0% to 35%

The graphite particles comprising a composite and/or mixture of core graphite and carbon and having a rhombohedral rate ranging from 0% to 35% can be obtained by, for instance, covering the core graphite with a carbon precursor, or causing a carbon precursor to be bonded to the core graphite, followed by firing at 600°C to 2200°C, or, alternatively, by vapor deposition by CVD (chemical vapor deposition).

Herein, the abovementioned composite denotes graphite particles in which carbon covers, or is bonded to, core graphite, and the rhombohedral rate lies within the abovementioned range. The carbon coverage is ordinarily 1 wt% or greater, preferably 2 wt% or greater, and is ordinarily 15 wt% or smaller, and preferably 10 wt% or smaller.

In the present invention, coverage can be calculated using the expression below, on the basis of, for instance, the core graphite mass and carbon mass derived from the carbon precursor after firing.

$$\text{Coverage (wt\%)} = \text{carbon mass}/(\text{core graphite mass} + \text{carbon mass}) \times 100$$

Herein, the abovementioned mixture denotes, for instance, a mixture, at any proportion, in a non-covered and non-bonded state, of carbon and graphite particles having a rhombohedral rate ranging from 0% to 35%.

(2) Graphite particles comprising a composite and/or mixture of core graphite and graphite and having a rhombohedral rate ranging from 0% to 35%

Graphite particles comprising a composite and/or mixture of core graphite and graphite and having a rhombohedral rate ranging from 0% to 35% can be obtained, for instance, by covering the core graphite with a carbon precursor, or causing a carbon precursor to be bonded to the core graphite, followed by graphitization at a temperature ranging from 2300°C to 3200°C.

Herein, the abovementioned composite denotes graphite particles wherein a graphitizable and/or non-graphitizable material covers, or is bonded to, core graphite, and the rhombohedral rate ranges from 0% to 35%.

The graphite coverage is ordinarily 1 wt% or greater, preferably 5 wt% or greater, more preferably 10 wt% or greater, and ordinarily 50 wt% or smaller, preferably 30 wt% or smaller.

The coverage in the present invention can be calculated using the expression below on the basis of the core graphite mass and the graphite mass derived from the carbon precursor, after graphitization.

$$\text{Coverage (wt\%)} = \text{precursor-derived graphite mass}/(\text{core graphite mass} + \text{precursor-derived graphite mass}) \times 100$$

Herein, the abovementioned mixture denotes, for instance, a mixture, at any proportion, in a non-covered and non-bonded state, of graphite and graphite particles having a rhombohedral rate ranging from 0% to 35%.

(3) Graphite particles having a rhombohedral rate ranging from 0% to 35%

Graphite particles having a rhombohedral rate ranging from 0% to 35% denote particles that comprise only graphite particles having a rhombohedral rate ranging from 0% to 35%, and that do not include the above-described structures (1) and (2). Specifically, the graphite particles denote graphite particles that are core graphite having been subjected to a mechanical energy treatment, and that are not composited with, or mixed with, carbon and/or graphite. Herein there can be used graphite particles that result from firing, at 400°C to 3200°C, graphite particles having a rhombohedral rate ranging from 0% to 35%.

The abovementioned graphite particles may be made up of one type of graphite particle, or may be made up of a plurality of types of graphite particles having dissimilar forms and particle sizes.

<Properties of the negative electrode active material>

The negative electrode active material has preferably the following properties.

(X-ray parameters)

The crystallite size (Lc), (La) of graphite particles in the negative electrode active material, as determined by X-ray diffraction in accordance with the method of the Japan Society for Promotion of Scientific Research, is preferably 30 nm or greater, and more preferably 100 nm or greater. The above crystallite size range is preferred since it results in a greater amount of chargeable lithium in the negative electrode active material, and high capacity can be easily achieved.

(Volume-average particle diameter)

The volume-average particle diameter of the negative electrode active material, i.e. the average particle diameter (median diameter), referred to volume, and that is worked out by laser diffraction/scattering, is ordinarily 1 $\mu$m or greater, preferably 3 $\mu$m or greater, more preferably 5 $\mu$m or greater, and particularly preferably 7 $\mu$m or greater, and ordinarily 100 $\mu$m or smaller, preferably 50 $\mu$m or smaller, more preferably 40 $\mu$m or smaller, and particularly preferably 30 $\mu$m or smaller.

If the volume-average particle diameter is too small, irreversible capacity may increase, which may result in loss of initial battery capacity. If the average particle diameter exceeds the abovementioned range, uneven coating surfaces are likely to occur during production of the electrode by coating, which is an undesirable occurrence in the battery production process.

The volume-average particle diameter is measured using a laser diffraction/scattering-type particle size distribution analyzer (LA-700, by Horiba Ltd.), by dissolving the carbon powder in a 0.2 wt% aqueous solution (about 10 mL) of polyoxyethylene (20) sorbitan monolaurate, which is a surfactant. The median diameter obtained in the measurement is defined as the volume-average particle diameter of the carbonaceous material of the present invention.

(Raman R value, Raman half-width)

The Raman R value of the negative electrode active material is a value measured by argon-ion laser Raman spectroscopy, and is ordinarily 0.01 or greater, preferably 0.03 or greater, and yet more preferably 0.1 or greater, and

ordinarily 1.5 or smaller, preferably 1.2 or smaller, yet more preferably 1 or smaller, and particularly preferably 0.5 or smaller.

If the Raman R value is too small, the crystallinity of the particle surface becomes excessively high, and there may be fewer sites for Li intercalation between layers accompanying charge and discharge, i.e. charge acceptance tends to decrease. If the density of the negative electrode is increased through pressing, after coating onto the collector, then crystals become readily oriented in a direction parallel to the electrode plate, and the load characteristic may be impaired. In particular, if the Raman R value is 0.1 or greater, then a coating film can be appropriately formed on the negative electrode surface. The storage characteristic, cycle characteristic and load characteristic can be improved as a result.

If the Raman R value is excessively large, the crystallinity at the particle surface may drop, reactivity with the nonaqueous electrolyte solution may increase, efficiency may drop, and generation of gas may increase.

The Raman half-width of the negative electrode active material around 1580 $cm^{-1}$ is not particularly limited, and is ordinarily 10 $cm^{-1}$ or greater, preferably 15 $cm^{-1}$ or greater, and ordinarily 100 $cm^{-1}$ or smaller, preferably 80 $cm^{-1}$ or smaller, yet more preferably 60 $cm^{-1}$ or smaller, and particularly preferably 40 $cm^{-1}$ or smaller.

If the Raman half-width is too small, the crystallinity of the particle surface becomes excessively high, and there tend to be fewer sites for Li intercalation between layers accompanying charge and discharge. That is, charge acceptance tends to decrease. If the density of the negative electrode is increased through pressing, after coating onto the collector, then crystals become readily oriented in a direction parallel to the electrode plate, and the load characteristic may be impaired. If the Raman half-width is excessively large, the crystallinity at the particle surface tends to drop, reactivity with the nonaqueous electrolyte solution tends to increase, efficiency tends to drop, and generation of gas tends to increase.

The Raman spectrum is measured using a Raman spectrometer (Raman spectrometer, by JASCO) by filling a sample, through natural dropping, into a measurement cell, and causing the cell to rotate within a plane perpendicular to an argon-ion laser beam while irradiating the sample surface in the cell with the laser beam. In the obtained Raman spectrum there is calculated the intensity ratio R ($R = I_B/I_A$) between the intensity $I_A$ of peak $P_A$ around 1580 $cm^{-1}$ and the intensity $I_B$ of peak $P_B$ around 1360 $cm^{-1}$. The Raman R value calculated in the above-described measurement is defined as the Raman R value of the carbonaceous material of the present invention. The half-width of the peak $P_A$ around 1580 $cm^{-1}$ of the obtained Raman spectrum is measured, and the measured half-width is defined as the Raman half-width of the carbonaceous material of the present invention.

The conditions of Raman measurement are as follows.

- Argon-ion laser wavelength: 514.5 nm
- laser power on sample: 15 to 25 mW
- Resolution: 10 to 20 $cm^{-1}$
- Measurement range: 1100 $cm^{-1}$ to 1730 $cm^{-1}$
- Raman R value, Raman half-width analysis: background processing
- Smoothing: simple average, 5-point convolution

(BET specific surface area)

The BET specific surface area of the negative electrode active material is a value of specific surface area as measured in accordance with the BET method, and is ordinarily 0.1 $m^2.g^{-1}$ or greater, preferably 0.7 $m^2 \cdot g^{-1}$ or greater, more preferably 1.0 $m^2 \cdot g^{-1}$ or greater, and particularly preferably 1.5 $m^2 \cdot g^{-1}$ or greater, and ordinarily 100 $m^2 \cdot g^{-1}$ or smaller, preferably 25 $m^2 \cdot g^{-1}$ or smaller, more preferably 15 $m^2 \cdot g^{-1}$ or smaller and particularly preferably 10 $m^2 \cdot g^{-1}$ or smaller.

If the value of BET specific surface area of the material is too small, lithium acceptance is likelier to worsen during charging, in a case where the material is used as a negative electrode material; also, lithium precipitates more readily on the electrode surface, and stability may be impaired. If the value of BET specific surface area of the material is too large, the reactivity with the nonaqueous electrolyte solution tends to increase when the material is used as a negative electrode material, generation of a large amount of gas tends to be likelier, and preferred battery less likely to be obtained.

The specific surface area can be measured, according to the BET method, using a surface area meter (automatic surface area analyzer, by Ohkura Riken), by pre-drying a sample, under a nitrogen stream, at 350°C for 15 minutes, after which the specific surface area is measured according to the nitrogen-adsorption BET one-point method, by gas flow, using a nitrogen-helium mixed gas adjusted so that the value of relative pressure is exactly 0.3 with respect to atmospheric pressure. The specific surface area worked out according to the above-described measurement is defined as the BET specific surface area of the negative electrode active material of the present invention.

(Tap density)

The tap density of the negative electrode active material is ordinarily 0.1 $g \cdot cm^{-3}$ or greater, preferably 0.5 $g \cdot cm^{-3}$ or greater, more preferably 0.7 $g \cdot cm^{-3}$ or greater, and particularly preferably 1 $g \cdot cm^{-3}$ or greater, and ordinarily 2 $g \cdot cm^{-3}$ or smaller, preferably 1.8 $g \cdot cm^{-3}$ or smaller, and more preferably 1.6 $g \cdot cm^{-3}$ or smaller. If the tap density of the material is too low, it becomes difficult to increase packing density when the material is used as the negative electrode, and achieving a high-capacity tends to be unlikelier. If the tap density is too high, voids between particles in the electrode tend to be excessively few, conductivity between particles becomes more difficult to preserve, and obtaining a preferred battery characteristics tends to be unlikelier.
The tap density is measured by dropping a sample, through a 300 μm-opening sieve, into a 20 $cm^3$ tapping cell, until the cell is filled up to the top. Thereafter, the sample is tapped 1000 times, with 10 mm-long strokes, using a powder-density measurement instrument (for instance, Tap Denser, by Seishin Enterprise), to calculate the tap density on the basis of the volume and the mass of the sample at that time. The tap density calculated according to the above measurement is defined as the tap density of the negative electrode active material of the present invention.

(Orientation ratio)

The orientation ratio of the negative electrode active material is ordinarily 0.005 or greater, preferably 0.01 or greater, and yet more preferably 0.015 or greater, and ordinarily 0.67 or smaller. The high-density charge-discharge characteristic may become poorer if the orientation ratio is below the above-described range. The upper limit of the abovementioned range is the theoretical upper limit value of the orientation ratio of the carbonaceous material.
The orientation ratio is measured by X-ray diffraction after pressure-molding of a sample. A sample of 0.47 g is stuffed into a 17 mm-diameter molding machine, and is compressed at 58.8 $MN \cdot m^{-2}$, to yield a molded product that is then measured by X-ray diffraction by being set flush with the surface of a measurement sample holder, using clay. The ratio represented by (110) diffraction peak intensity/(004) diffraction peak intensity is calculated from the peak intensities of (110) diffraction and (004) diffraction for carbon. The orientation ratio as calculated in the above-described measurement is defined as the orientation ratio of the carbonaceous material of the present invention.
The X-ray diffraction measurement conditions are as follows. Herein, "2θ" is the diffraction angle.

- Target: Cu(Kα rays) graphite monochromator
- Slit:

  Divergent slit = 0.5 degrees
  Light-receiving slit = 0.15 mm
  scattering slit = 0.5 degrees

- Measurement range and step angle/measurement time:

  (110) plane: 75 degree $2\theta \leq 80$ degrees 1 degree/60 seconds
  (004) plane: 52 degrees $\leq 2\theta \leq 57$ degrees 1 degree/60 seconds

(Aspect ratio)

The aspect ratio (major axis/minor axis) of the graphite particles of the negative electrode active material is ordinarily 0.05 or greater, preferably 0.07 or greater, more preferably 0.1 or greater, and particularly preferably 0.14 or greater, and ordinarily 20 or smaller, preferably 15 or smaller, more preferably 10 or smaller, and particularly preferably 7 or smaller.
If the aspect ratio is too small or too large, particle shape tends to become plate- like or needle-like; as a result, particles become readily oriented parallelly to the collector in the electrode, and intercalation of Li tends to be accompanied by swelling in one direction, as a result of which conductive paths tends to be depleted, and the cycle characteristic to be impaired.
Preferably, the aspect ratio lies within the above range, since in that case, by contrast, the graphite particles resemble spheres or cubes, in those instances where electrode density is increased in order to increase capacity; accordingly, graphite particles are unlikelier to break and unlikelier to desorb or the like from the collector, and the cycle characteristic is enhanced.
The above aspect ratio range is also preferred since larger voids are readily formed between graphite particles, Li diffuses faster between particles, and the rate characteristic can be expected to be enhanced. The above aspect ratio is likewise preferred since graphite particles are less likely to break, and hence graphite particles do not become oriented

readily in the negative electrode, swelling of the electrode accompanying charge and discharge can be suppressed, and conductive paths are secured between active material particles. The cycle characteristic is enhanced as a result.

The above aspect ratio is likewise preferred since electrode swelling can be suppressed; accordingly, space is readily secured inside the battery. By virtue of that space in the interior of the battery, the internal pressure of the battery rises little, even upon generation of small amounts of gas on account of oxidative decomposition, and battery swelling or the like are unlikelier to occur.

The aspect ratio of the spheroidized graphite particles can be measured in accordance with the procedure below, using the negative electrode.

A photograph of the negative electrode surface is taken (alternatively, a face parallel to the film surface of the collector is polished and cut, and cross-section photographs are taken). The obtained photographs are subjected to image analysis, to measure thereby the major axis (longest axis) of the graphite particles surface (cross-section), at 50 or more points. The negative electrode is cut and polished perpendicularly to the film surface of the collector, cross-sectional photographs are taken, and the obtained photographs are subjected to image analysis, to measure thereby the minor axis (particle thickness) of the cross-section of the graphite particles, at 50 or more points. The respective average values of the measured major axes and minor axes are worked out, and the ratio between the average major axis and the average minor axis is taken as the aspect ratio (major axis/minor axis).

In a case where the negative electrode active material (for instance, a powder-like material) does not preserve the form of the negative electrode, negative electrode active material particles are embedded in resin, in a state where the particles are arranged on a flat plate that constitutes a substrate, for instance glass or the like, a surface parallel to the flat plate is polished or cut, and the major axis is measured in the same way as described above, from cross-sectional photographs. The aspect ratio can then be worked out by similarly measuring the minor axis of graphite particle cross-sections.

Particles that are formed into electrode plates tend to be ordinarily arrayed in such a manner that the thickness direction of the particles is perpendicular to the flat plate. Therefore, the above method allows obtaining the characteristic major axis and minor axis of the particles.

Images of the cross-sections (or surface of the particles) are ordinarily captured using a scanning electron microscope (SEM). In cases where the shape of spheroidized graphite cannot be determined on the basis of SEM micrographs, the aspect ratio can be worked out by taking photographs of the cross-section (surface), in the same way as described above, but using a polarizing microscope or transmission electron microscope (TEM).

The method for obtaining spheroidized graphite particles having an aspect ratio lying within the above range is not particularly limited, but, preferably, the method involves using an apparatus such that mechanical action in the form mainly of impact forces but also compression, friction, shear forces and the like, including interactions between particles, is exerted on the graphite particles. Specifically, there is preferably used a surface-treatment apparatus having a rotor, with multiple blades disposed thereon, inside a casing, and wherein mechanical action in the form of impact compression, friction, shearing forces and the like is exerted, through high-speed rotation of the rotor, onto a carbon material that is introduced into the apparatus. Preferably, the apparatus has a mechanism that repeatedly exerts a mechanical action on the carbon material, by causing the latter to circulate, or an apparatus having a mechanism wherein there is connected a plurality units that lack a circulation mechanism. Preferred examples of the apparatus include, for instance, a hybridization system by Nara Machinery Co., Ltd.

<Configuration and production method of the negative electrode>

Any known method can be used to produce the electrode, so long as the effect of the present invention is not significantly impaired thereby. For instance, the binder, the solvent and, as the case may require, a thickener, a conductive material, a filler and the like, are added to the negative electrode active material, to yield a slurry that is then applied onto a collector and is dried. The negative electrode can be formed thereby.

(Collector)

Any known collector can be used as the collector that holds the negative electrode active material. Examples of the metallic material of the collector of the negative electrode include, for instance, aluminum, copper, nickel, stainless steel, nickel-plated steel or the like, but preferably copper, in terms of cost and ease of processing.

In a case where the collector is a metallic material, the collector may be shaped, for instance, as a metal foil, metal cylinder, metal coil, metal plate, metal thin film, expanded metal, punched metal, foamed metal or the like. Preferably, the collector is a metal thin film, more preferably a copper foil, and yet more preferably a rolled copper foil obtained by rolling or an electrolytic copper foil obtained by electrolysis.

The thickness of the collector is ordinarily 1 μm or greater, preferably 5 μm or greater, and ordinarily 100 μm or smaller, preferably 50 μm or smaller. That is because the capacity of the battery as a whole may decrease if the

thickness of the negative electrode collector is excessive. Conversely, battery handleability may be poor if the thickness is excessively small.

(Ratio between the thicknesses of the collector and the negative electrode active material layer)

The ratio between the thicknesses of the collector and the negative electrode active material layer is not particularly limited, but the value of "(thickness of the negative electrode active material layer on one side immediately prior to injection of nonaqueous electrolyte solution)/(collector thickness)" is preferably 150 or smaller, more preferably 20 or smaller, and particularly preferably 10 or smaller, and preferably 0.1 or greater, more preferably 0.4 or greater and particularly preferably 1 or greater. If the ratio between the thicknesses of the collector and the negative electrode active material layer is excessively large, the collector tends to heat up, on account of Joule heat, during charge and discharge at a high current density. If the ratio between the thicknesses of the collector and the negative electrode active material layer is too small, the volume ratio of the collector with respect to the negative electrode active material tends to increase, and battery capacity to decrease.

(Binder)

The binder that binds the negative electrode active material is not particularly limited, provided that it is a stable material towards the nonaqueous electrolyte solution and towards the solvent that is used during the production of the electrodes.

Specific examples thereof include, for instance, resin-based polymers such as polyethylene, polypropylene, polyethylene terephthalate, polymethyl methacrylate, aromatic polyamide, polyimide, cellulose, nitrocellulose or the like; rubber-like polymers such as SBR (styrene-butadiene rubber), isoprene rubber, butadiene rubber, fluororubber, NBR (acrylonitrile-butadiene rubber), ethylene-propylene rubber or the like; styrene-butadiene-styrene block copolymers or hydrogenated products thereof; thermoplastic elastomeric polymers such as EPDM (ethylene-propylene-diene terpolymer), styrene-ethylene-butadiene-styrene copolymers, styreneisoprene-styrene block copolymers, or hydrogenated products thereof; hard resin-like polymers such as syndiotactic-1,2-polybutadiene, polyvinyl acetate, ethylene-vinyl acetate copolymers, propylene-$\alpha$-olefin copolymers and the like; fluoropolymers such as polyvinylidene fluoride, polytetrafluoroethylene, fluorinated polyvinylidene fluoride, polytetrafluoroethylene-ethylene copolymers and the like; and polymer compositions having ionic conductivity towards alkali metal ions (in particular, lithium ions). The foregoing may be used singly as one type, or as two or more concurrent types in any combinations and ratios.

The proportion of binder in the negative electrode active material is preferably 0.1 wt% or more, yet more preferably 0.5 wt% or more, and particularly preferably 0.6 wt% or more, and preferably 20 wt% or less, more preferably 15 wt% or less, yet more preferably 10 wt% or less, and particularly preferably 8 wt% or less. If the proportion of binder with respect to the negative electrode active material is excessively large, there increases the proportion of binder that makes no contribution to battery capacity, and battery capacity tends to drop as a result. If the proportion is too small, the strength of the negative electrode tends to drop.

In a case, in particular, in which the main component of the binder is a rubber-like polymer typified by SBR, the proportion of binder in the negative electrode active material is ordinarily 0.1 wt% or more, preferably 0.5 wt% or more, yet more preferably 0.6 wt% or more, and ordinarily 5 wt% or less, preferably 3 wt% or less and yet more preferably 2 wt% or less. In a case where the main component is a fluoropolymer typified by polyvinylidene fluoride, the proportion in the negative electrode active material is ordinarily 1 wt% or more, preferably 2 wt% or more, yet more preferably 3 wt% or more, and ordinarily 15 wt% or less, preferably 10 wt% or less and yet more preferably 8 wt% or less.

(Slurry-forming solvent)

The solvent used for forming the slurry is not particularly limited, and may be any aqueous solvent or organic solvent, provided that the solvent can dissolve or disperse the negative electrode active material, the binder, as well as a thickener and conductive material that are used as the case may require.

Examples of aqueous solvents include, for instance, water and alcohol. Examples of organic solvents include, for instance, N-methyl pyrrolidone (NMP), dimethyl formamide, dimethyl acetamide, methyl ethyl ketone, cyclohexanone, methyl acetate, methyl acrylate, diethyl triamine, N,N-dimethylaminopropyl amine, tetrahydrofuran (THF), toluene, acetone, diethyl ether, dimethyl acetamide, hexamethylphosphoric amide, dimethyl sulfoxide, benzene, xylene, quinoline, pyridine, methyl naphthalene, hexane or the like.

In the case where an aqueous solvent is used, it is preferable to add a dispersant or the like in conjunction with the thickener, and to form a slurry using a latex of SBR or the like. These solvents may be used singly as one type, or as two or more concurrent types in any combinations and ratios.

(Thickener)

A thickener is ordinarily used in order to adjust the viscosity of the slurry during production of the negative electrode active material layer. The thickener is not particularly limited, and specific examples thereof include, for instance, carboxymethyl cellulose, methyl cellulose, hydroxymethyl cellulose, ethyl cellulose, polyvinyl alcohol, starch oxide, phosphorylated starch, casein, as well as salts thereof. The foregoing may be used singly as one type, or as two or more concurrent types in any combinations and ratios.

If a thickener is further used, then the proportion of thickener in the negative electrode active material is ordinarily 0.1 wt% or more, preferably 0.5 wt% or more, yet more preferably 0.6 wt% or more, and ordinarily 5 wt% or less, preferably 3 wt% or less and yet more preferably 2 wt% or less. Coatability tends to be significantly poorer if the proportion of thickener with respect to the negative electrode active material is excessively small. If the proportion of thickener is excessively large, the proportion of negative electrode active material in the negative electrode active material layer tends to drop, which gives rise to problems such as lower battery capacity, and greater resistance between negative electrode active material particles.

(Electrode density)

The electrode structure upon formation of the negative electrode active material to yield an electrode is not particularly limited. However, the density of the negative electrode active material that is present on the collector is preferably 1 $g \cdot cm^{-3}$ or greater, yet more preferably 1.2 $g \cdot cm^{-3}$ or greater, a particularly preferably 1.3 $g \cdot cm^{-3}$ or greater, and preferably 2.2 $g \cdot cm^{-3}$ or less, more preferably 2.1 $g \cdot cm^{-3}$ or less, yet more preferably 2.0 $g \cdot cm^{-3}$ or less, and particularly preferably 1.9 $g \cdot cm^{-3}$ or less. If the density of the negative electrode active material that is present on the collector is excessively large, negative electrode active material particles tend to break, initial irreversible capacity tends to increase, and the high-current density charge-discharge characteristic tends to worsen on account of lower permeability of the nonaqueous electrolyte solution in the vicinity of the interface of the collector/negative electrode active material. If the density is too low, conduction between negative electrode active material particles tends to drop, battery resistance to increase, and capacity per unit volume to decrease.

(Thickness of the negative electrode plate)

The thickness of the negative electrode plate is designed in accordance with the positive electrode plate that is used, and is not particularly limited. The thickness of the negative electrode active material layer, resulting from subtracting the thickness of the metal foil (collector) from that of the negative electrode plate, is ordinarily 15 $\mu m$ or greater, preferably 20 $\mu m$ or greater, more preferably 30 $\mu m$ or greater, and ordinarily 300 $\mu m$ or smaller, preferably 280 $\mu m$ or smaller, and more preferably 250 $\mu m$ or smaller.

(Surface cover of the negative electrode plate)

A surface cover may be used in which a substance having composition different from that of the surface of the negative electrode plate is deposited on the surface of the negative electrode plate. Examples of surface deposition substances include, for instance, oxides such as aluminum oxide, silicon oxide, titanium oxide, zirconium oxide, magnesium oxide, calcium oxide, boron oxide, antimony oxide, bismuth oxide or the like; sulfates such as lithium sulfate, sodium sulfate, potassium sulfate, magnesium sulfate, calcium sulfate, aluminum sulfate or the like; and carbonates such as lithium carbonate, calcium carbonate, magnesium carbonate and the like.

2. Nonaqueous electrolyte solution

2-1. Electrolyte

<Lithium salt>

A lithium salt is ordinarily used as the electrolyte. The electrolyte is not particularly limited and any lithium salt can be used, so long as it is a known lithium salt that is utilized in the application in question. Specific examples of the lithium salt are given below.

For instance, inorganic lithium salts such as $LiPF_6$, $LiBF_4$, $LiClO_4$, $LiAlF_4$, $LiSbF_6$, $LiTaF_6$, $LiWF_7$ or the like; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, $CF_3CF_2CF_2CF_2CO_2Li$ or the like; lithium sulfonate salts such as $CH_3SO_3Li$, $CH_2FSO_3Li$, $CHF_2SO_3Li$, $CF_3SO_3Li$, $CF_3CF_2SO_3Li$ $CF_3CF_2CF_2SO_3Li$, $CF_3CF_2CF_2CF_2SO_3Li$ or the

like; lithium imide salts such as $LiN(FCO)_2$, LiN(FCO) ($FSO_2$), $LiN(FSO_2)_2$, $LiN(FSO_2)$ ($CF_3SO_2$), $LiN(CF_3SO_2)_2$, $LiN(C_2F_5SO_2)_2$, lithium cyclic 1,2-perfluoroethanedisulfonylimide, lithium cyclic 1,3-perfluoropropanedisulfonylimide, $LiN(CF_3SO_2)$ ($C_4F_9SO_2$) or the like; lithium methide salts such as $LiC(FSO_2)_3$, $LiC(CF_3SO_2)_3$, $LiC(C_2F_5SO_2)_3$ or the like; and fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, $LiBF_2(C_2E_5SO_2)_2$ or the like.

Particularly preferred among the foregoing are $LiPF_6$, $LiBF_4$, $LiSbF_6$, $LiTaF_6$, $LiN(FSO_2)_2$, $LiN(FSO_2)$ ($CF_3SO_2$), $LiN(CF_3SO_2)_2$, $LiN(C_2F_5SO_2)_2$, lithium cyclic 1,2-perfluoroethanedisulfonylimide, lithium cyclic 1,3-perfluoropropanedisulfonylimide, $LiC(FSO_2)_3$. $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$ and the like, in terms of the effect of enhancing the output characteristic, high-rate charge-discharge characteristic, high-temperature storage characteristic, cycle characteristic and the like.

The concentration of these lithium salts in the nonaqueous electrolyte solution, and the concentration of the below-described lithium salts represented by (A) and (B), is not particularly limited, so long as the effect of the present invention is not impaired by the content of the lithium salt. However, the total molar concentration of the lithium salt in the nonaqueous electrolyte solution is preferably 0.3 mol/L or higher, more preferably 0.4 mol/L or higher, and yet more preferably 0.5 mol/L or higher, and preferably 3 mol/L or lower, more preferably 2.5 mol/L or lower, and yet more preferably 2.0 mol/L or lower. The effect on the low-temperature characteristic, cycle characteristic, high-temperature characteristic and the like is enhanced if the concentration lies within these ranges. If the total molar concentration of lithium is excessively low, the electrical conductivity of the electrolyte solution may be insufficient in some instances. If the concentration is excessively high, on the other hand, viscosity becomes higher, and hence electric conductance may decrease, and battery performance may decrease.

The above-described lithium salt, as well as the below-described lithium salts represented by (A) and (B), may be used in arbitrary combinations.

2-2. Solvent

As the nonaqueous solvent there can be used saturated cyclic and linear carbonates, carbonates having at least one fluorine atom, as well as cyclic and linear carboxylic acid esters, ether compounds, sulfone compounds and the like. These nonaqueous solvents may be used in arbitrary combinations.

<Saturated cyclic carbonate>

Examples of saturated cyclic carbonates include, for instance, saturated cyclic carbonates having a C2 to C4 alkylene group. Specific examples of C2 to C4 saturated cyclic carbonates include, for instance, ethylene carbonate, propylene carbonate, butylene carbonate and the like. Particularly preferred among the foregoing are ethylene carbonate and propylene carbonate, in terms of enhancing battery characteristics as a result of an enhanced degree of dissociation of lithium ions.

The saturated cyclic carbonate may be used singly as one type, or as two or more concurrent types in any combinations and ratios.

The blending amount of the saturated cyclic carbonate is not particularly limited, and may be any blending amount so long as the effect of the present invention is not significantly impaired thereby. In a case where one type of saturated cyclic carbonate is used singly, the lower limit of the blending amount is 5 vol% or more, and more preferably 10 vol% or more, with respect to 100 vol% of nonaqueous solvent. Through setting of this range, drops in electrical conductivity derived from decreased permittivity of the nonaqueous electrolyte solution are readily avoided, and the large-current discharge characteristic, stability towards the negative electrode and cycle characteristic of the nonaqueous electrolyte battery are readily brought to within good ranges. The upper limit is 95 vol% or less, more preferably 90 vol% or less, and yet more preferably 85 vol% or less. By setting these ranges, the viscosity of the nonaqueous electrolyte solution is brought to within an appropriate range and drops in ion conductance are suppressed; accordingly, the load characteristic of the nonaqueous electrolyte battery is readily brought to within a good range.

<Linear carbonate>

The linear carbonate is preferably a C3 to C7 linear carbonate.

Specific examples of C3 to C7 linear carbonates include, for instance, dimethyl carbonate, diethyl carbonate, di-n-propyl carbonate, diisopropyl carbonate, n-propyl isopropyl carbonate, ethyl methyl carbonate, methyl-n-propyl carbonate, n-butyl methyl carbonate, isobutyl methyl carbonate, t-butyl methyl carbonate, ethyl-n-propyl carbonate, n-butylethyl carbonate, isobutylethyl carbonate, t-butylethyl carbonate and the like.

Preferred among the foregoing are dimethyl carbonate, diethyl carbonate, di-n-propyl carbonate, diisopropyl carbonate, n-propyl isopropyl carbonate, ethyl methyl carbonate and methyl-n-propyl carbonate, and particularly preferably, dimethyl carbonate, diethyl carbonate and ethyl methyl carbonate.

The linear carbonate may be used singly as one type, or as two or more concurrent types in any combinations and ratios.

The blending amount of the linear carbonate is preferably 5 vol% or more, more preferably 10 vol% or more, and yet more preferably 15 vol% or more with respect to 100 vol% of nonaqueous solvent. Setting such a lower limit has the effect of bringing the viscosity of the nonaqueous electrolyte solution to within an appropriate range, and of suppressing drops in ion conductance; accordingly, the large-current discharge characteristic of the nonaqueous electrolyte battery can be readily brought to within a good range. The content of linear carbonate is preferably 90 vol% or less, and more preferably 85 vol% or less, with respect to 100 vol% of nonaqueous solvent. By setting such an upper limit, drops in electrical conductivity derived from decreased permittivity of the nonaqueous electrolyte solution are avoided, and the large-current discharge characteristic nonaqueous electrolyte battery can be readily brought to within a good range.

<Cyclic carboxylic acid ester>

Examples of the cyclic carboxylic acid ester include, for instance, cyclic carboxylic acid esters having a total of 3 to 12 carbon atoms in the structural formula. Specific examples thereof include, for instance, gamma-butyrolactone, gamma-valerolactone, gamma-caprolactone, epsilon-caprolactone and the like. Particularly preferred among the foregoing is gamma-butyrolactone, in terms of enhancing battery characteristics as a result of an enhanced degree of dissociation of lithium ions.

The cyclic carboxylic acid ester may be used singly as one type, or as two or more concurrent types in any combinations and ratios.

Ordinarily, the blending amount of the cyclic carboxylic acid ester is preferably 5 vol% or more, and more preferably 10 vol% or more with respect to 100 vol% of nonaqueous solvent. By setting such a lower limit, the electrical conductivity of the nonaqueous electrolyte solution is improved, and the large-current discharge characteristic of the nonaqueous electrolyte battery is readily enhanced. The blending amount of the cyclic carboxylic acid ester is preferably 50 vol% or less, and more preferably 40 vol% or less. By setting such an upper limit, the viscosity of the nonaqueous electrolyte solution is brought to within an appropriate range, drops in electrical conductivity are avoided, increases in negative electrode resistance are suppressed, and the large-current discharge characteristic of the nonaqueous electrolyte secondary battery is readily brought to within a good range.

<Linear carboxylic acid ester>

Examples of the linear carboxylic acid ester include, for instance, linear carboxylic acid esters having a total of 3 to 7 carbon atoms in the structural formula. Specific examples thereof include, for instance, methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, t-butyl propionate, methyl butyrate, ethyl butyrate, n-propyl butyrate, isopropyl butyrate, methyl isobutyrate, ethyl isobutyrate, n-propyl isobutyrate, isopropyl isobutyrate and the like.

Preferred among the foregoing are methyl acetate, ethyl acetate, n-propyl acetate, n-butyl acetate, methyl propionate, ethyl propionate, n-propyl propionate, isopropyl propionate, methyl butyrate, ethyl butyrate and the like, in terms of enhancing ion conductance through lowered viscosity.

The linear carboxylic acid ester may be used singly as one type, or as two or more concurrent types in any combinations and ratios.

Ordinarily, the blending amount of the linear carboxylic acid ester is preferably 10 vol% or more, more preferably 15 vol% or more with respect to 100 vol% of nonaqueous solvent. By setting such a lower limit, the electrical conductivity of the nonaqueous electrolyte solution is improved, and the large-current discharge characteristic of the nonaqueous electrolyte battery is readily enhanced. The blending amount of the linear carboxylic acid ester is preferably 60 vol% or less, more preferably 50 vol% or less, with respect to 100 vol% of nonaqueous solvent. By setting such an upper limit, increases in negative electrode resistance are suppressed, and the large-current discharge characteristic, as well as the cycle characteristic of the nonaqueous electrolyte battery, are readily brought to within good ranges.

<Ether compound>

The ether compound is preferably a C3 to C10 linear ether or a C3 to C6 cyclic ether in which some of hydrogen atoms are optionally substituted with fluorine.

Specific examples of C3 to C10 linear ethers include, for instance, diethyl ether, di(2-fluoroethyl)ether, di(2,2-difluoroethyl)ether, di(2,2,2-trifluoroethyl)ether, ethyl(2-fluoroethyl)ether, ethyl(2,2,2-trifluoroethyl)ether, ethyl(1,1,2,2-tetrafluoroethyl)ether, (2-fluoroethyl)(2,2,2-trifluoroethyl)ether, (2-fluoroethyl)(1,1,2,2-tetrafluoroethyl)ether, (2,2,2-trifluoroethyl)(1,1,2,2-tetrafluoroethyl)ether, ethyl-n-propyl ether, ethyl(3-fluoro-n-propyl)ether, ethyl(3,3,3-trifluoro-n-propyl)ether, ethyl(2,2,3,3-tetrafluoro-n-propyl)ether, ethyl(2,2,3,3,3-pentafluoro-n-propyl)ether, 2-fluoroethyl-n-propyl ether, (2-fluoroethyl)(3-fluoro-n-propyl)ether, (2-fluoroethyl)(3,3,3-trifluoro-n-propyl)ether, (2-fluoroethyl)(2,2,3,3-tetrafluoro-n-propyl) ether, (2-fluoroethyl)(2,2,3,3,3-pentafluoro-n-propyl)ether, 2,2,2-trifluoroethyl-n-propyl ether, (2,2,2-trifluoroethyl)(3-fluoro-n-propyl)ether, (2,2,2-trifluoroethyl)(3,3,3-trifluoro-n-propyl)ether, (2,2,2-trifluoroethyl)(2,2,3,3-tetrafluoro-n-propyl)ether, (2,2,2-trifluoroethyl)(2,2,3,3,3-pentafluoro-n-propyl)ether, 1,1,2,2-tetrafluoroethyl-n-propyl ether, (1,1,2,2-tetrafluoroethyl)(3-fluoro-n-propyl) ether, (1,1,2,2-tetrafluoroethyl)(3,3,3-trifluoro-n-propyl)ether, (1,1,2,2-tetrafluoroethyl)(2,2,3,3-tetrafluoro-n-propyl)ether, (1,1,2,2-tetrafluoroethyl)(2,2,3,3,3-pentafluoro-n-propyl)ether, di-n-propyl ether, (n-propyl)(3-fluoro-n-propyl)ether, (n-propyl)(3,3,3-trifluoro-n-propyl)ether, (n-propyl)(2,2,3,3-tetrafluoro-n-propyl)ether, (n-propyl) (2,2,3,3,3-pentafluoro-n-propyl)ether, di(3-fluoro-n-propyl)ether, (3-fluoro-n-propyl)(3,3,3-trifluoro-n-propyl)ether, (3-fluoro-n-propyl)(2,2,3,3-tetrafluoro-n-propyl)ether, (3-fluoro-n-propyl)(2,2,3,3,3-pentafluoro-n-propyl)ether, di(3,3,3-trifluoro-n-propyl)ether, (3,3,3-trifluoro-n-propyl) (2,2,3,3-tetrafluoro-n-propyl)ether, (3,3,3-trifluoro-n-propyl)(2,2,3,3,3-pentafluoro-n-propyl)ether, di(2,2,3,3-tetrafluoro-n-propyl)ether, (2,2,3,3-tetrafluoro-n-propyl) (2, 2, 3, 3, 3-pentafluoro-n-propyl) ether, di(2,2,3,3,3-pentafluoro-n-propyl) ether, di-n-butyl ether, dimethoxymethane, methoxyethoxymethane, methoxy(2-fluoroethoxy)methane, methoxy(2,2,2-trifluoroethoxy)methane, methoxy(1,1,2,2-tetrafluoroethoxy)methane, diethoxymethane, ethoxy(2-fluoroethoxy)methane, ethoxy(2,2,2-trifluoroethoxy)methane, ethoxy(1,1,2,2-tetrafluoroethoxy)methane, di(2-fluoroethoxy)methane, (2-fluoroethoxy)(2,2,2-trifluoroethoxy)methane, (2-fluoroethoxy)(1,1,2,2-tetrafluoroethoxy)methane, di(2,2,2-trifluoroethoxy)methane, (2,2,2-trifluoroethoxy)(1,1,2,2-tetrafluoroethoxy)methane, di(1,1,2,2-tetrafluoroethoxy)methane, dimethoxyethane, methoxyethoxyethane, methoxy(2-fluoroethoxy)ethane, methoxy(2,2,2-trifluoroethoxy)ethane, methoxy(1,1,2,2-tetrafluoroethoxy)ethane, diethoxyethane, ethoxy(2-fluoroethoxy)ethane, ethoxy(2,2,2-trifluoroethoxy)ethane, ethoxy(1,1,2,2-tetrafluoroethoxy)ethane, di(2-fluoroethoxy)ethane, (2-fluoroethoxy)(2,2,2-trifluoroethoxy)ethane, (2-fluoroethoxy)(1,1,2,2-tetrafluoroethoxy)ethane, di(2,2,2-trifluoroethoxy)ethane, (2,2,2-trifluoroethoxy)(1,1,2,2-tetrafluoroethoxy)ethane, di(1,1,2,2-tetrafluoroethoxy)ethane, ethylene glycol di-n-propyl ether, ethylene glycol di-n-butyl ether, diethylene glycol dimethyl ether and the like.

Specific examples of C3 to C6 cyclic ethers include, for instance, tetrahydrofuran, 2-methyltetrahydrofuran, 3-methyltetrahydrofuran, 1,3-dioxane, 2-methyl-1,3-dioxane, 4-methyl-1,3-dioxane, 1,4-dioxane and the like, and fluorinated compounds of the foregoing.

Preferred among the foregoing are dimethoxymethane, diethoxymethane, ethoxymethoxymethane, ethylene glycol di-n-propyl ether, ethylene glycol di-n-butyl ether and diethylene glycol dimethyl ether, in terms of enhancing ion dissociation ability by virtue of their high solvating power on lithium ions. Particularly preferred among the foregoing are dimethoxymethane, diethoxymethane and ethoxymethoxymethane, on account of their low viscosity and the high ion conductance that they impart.

The ether compound may be used singly as one type, or as two or more concurrent types in any combinations and ratios.

Ordinarily, the blending amount of the ether compound is preferably 5 vol% or more, more preferably 10 vol% or more and yet more preferably 15 vol% or more, and preferably 70 vol% or less, more preferably 60 vol% or less and yet more preferably 50 vol% or less, with respect to 100 vol% of nonaqueous solvent. Within such ranges, there is readily secured the enhancing effect on ion conductance, derived from a enhanced degree of dissociation of lithium ions and a drop in viscosity, that is exerted by the linear ether. In the case where the negative electrode active material is a carbonaceous material, the linear ether is co-intercalated together with lithium ions. Drops in capacity are likelier to be avoided as a result.

<Sulfone compound>

The sulfone compound is preferably a C3 to C6 cyclic sulfone or a C2 to C6 linear sulfone. The number of sulfonyl groups in one molecule is preferably 1 or 2.

Examples of cyclic sulfones include, for instance, trimethylene sulfones, tetramethylene sulfones and hexamethylene sulfones, which are monosulfone compounds; and trimethylene disulfones, tetramethylene disulfones hexamethylene disulfones and the like, which are disulfone compounds. More preferred among the foregoing, in terms of permittivity and viscosity, are tetramethylene sulfones, tetramethylene disulfones, hexamethylene sulfones and hexamethylene disulfones, and particularly preferably tetramethylene sulfones (sulfolanes).

The sulfolane is preferably sulfolane and/or a sulfolane derivative (hereafter also referred to as sulfolanes such as sulfolane). The sulfolane derivative is preferably a sulfolane derivative wherein one or more hydrogen atoms bonded to the carbon atoms that make up the sulfolane ring are substituted with a fluorine atom or an alkyl group.

Preferred among the foregoing are 2-methylsulfolane, 3-methylsulfolane, 2-fluorosulfolane, 3-fluorosulfolane, 2,2-difluorosulfolane, 2,3-difluorosulfolane, 2,4-difluorosulfolane, 2,5-difluorosulfolane, 3,4-difluorosulfolane, 2-fluoro-3-methylsulfolane, 2-fluoro-2-methylsulfolane, 3-fluoro-3-methylsulfolane, 3-fluoro-2-methylsulfolane, 4-fluoro-3-methylsulfolane, 4-fluoro-2-methylsulfolane, 5-fluoro-3-methylsulfolane, 5-fluoro-2-methylsulfolane, 2-fluoromethylsulfolane, 3-fluoromethylsulfolane, 2-difluoromethylsulfolane, 3-difluoromethylsulfolane, 2-trifluoromethylsulfolane, 3-trifluoromethylsulfolane, 2-fluoro-3-(trifluoromethyl)sulfolane, 3-fluoro-3-(trifluoromethyl)sulfolane, 4-fluoro-3-(trifluoromethyl)sulfolane, 5-fluoro-3-(trifluoromethyl)sulfolane and the like, in terms of high ion conductance and high input and output.

Examples of linear sulfones include, for instance, dimethyl sulfone, ethylmethyl sulfone, diethyl sulfone, n-propylmethyl sulfone, n-propylethyl sulfone, di-n-propyl sulfone, isopropylmethyl sulfone, isopropylethyl sulfone, diisopropyl sulfone, n-butylmethyl sulfone, n-butylethyl sulfone, t-butylmethyl sulfone, t-butylethyl sulfone, monofluoromethylmethyl sulfone, difluoromethylmethyl sulfone, trifluoromethylmethyl sulfone, monofluoroethylmethyl sulfone, difluoroethylmethyl sulfone, trifluoroethylmethyl sulfone, pentafluoroethylmethyl sulfone, ethylmonofluoromethyl sulfone, ethyldifluoromethyl sulfone, ethyltrifluoromethyl sulfone, perfluoroethylmethyl sulfone, ethyltrifluoroethyl sulfone, ethylpentafluoroethyl sulfone, di(trifluoroethyl)sulfone, perfluorodiethyl sulfone, fluoromethyl-n-propyl sulfone, difluoromethyl-n-propyl sulfone, trifluoromethyl-n-propyl sulfone, fluoromethylisopropyl sulfone, difluoromethylisopropyl sulfone, trifluoromethylisopropyl sulfone, trifluoroethyl-n-propyl sulfone, trifluoroethylisopropyl sulfone, pentafluoroethyl-n-propyl sulfone, pentafluoroethylisopropyl sulfone, trifluoroethyl-n-butyl sulfone, trifluoroethyl-t-butyl sulfone, pentafluoroethyl-n-butyl sulfone, pentafluoroethyl-t-butyl sulfone and the like.

Preferred among the foregoing are dimethyl sulfone, ethylmethyl sulfone, diethyl sulfone, n-propylmethyl sulfone, isopropylmethyl sulfone, n-butylmethyl sulfone, t-butylmethyl sulfone, monofluoromethylmethyl sulfone, difluoromethylmethyl sulfone, trifluoromethylmethyl sulfone, monofluoroethylmethyl sulfone, difluoroethylmethyl sulfone, trifluoroethylmethyl sulfone, pentafluoroethylmethyl sulfone, ethylmonofluoromethyl sulfone, ethyldifluoromethyl sulfone, ethyltrifluoromethyl sulfone, ethyltrifluoroethyl sulfone, ethylpentafluoroethyl sulfone, trifluoromethyl-n-propyl sulfone, trifluoromethylisopropyl sulfone, trifluoroethyl-n-butyl sulfone, trifluoroethyl-t-butyl sulfone, trifluoromethyl-n-butyl sulfone, trifluoromethyl-t-butyl sulfone and the like, in terms of high ion conductance and high input and output.

The sulfone compound may be used singly as one type, or as two or more concurrent types in any combinations and ratios.

Ordinarily, the blending amount of the sulfone compound is preferably 5 vol% or more, more preferably 10 vol% or more and yet more preferably 15 vol% or more, and preferably 40 vol% or less, more preferably 35 vol% or less and yet more preferably 30 vol% or less, with respect to 100 vol% of nonaqueous solvent. Within these ranges, an enhancing effect on durability in terms of cycle characteristic and storage characteristic and the like is readily achieved, the viscosity of the nonaqueous electrolyte solution can be brought to within an appropriate range, and drops in electrical conductivity can be avoided; also, drops in the charge-discharge capacity retention rate can be readily avoided, in a case where the nonaqueous electrolyte battery is charged and discharged at a high current density.

2-3. Compound represented by formula (2)

The present invention is a nonaqueous electrolyte secondary battery that comprises a nonaqueous electrolyte solution that contains a lithium salt and a nonaqueous solvent that dissolves the lithium salt, a negative electrode capable of absorbing and releasing lithium ions, and a positive electrode; wherein the nonaqueous electrolyte solution contains at least one compound selected from the group consisting of compounds represented by formula (2). Specific examples of compounds of formula (2) are set forth below.

The molecular weight is more preferably 100 or greater, and more preferably 200 or less. Within the abovementioned range, the solubility of the compound represented by formula (2) in the nonaqueous electrolyte solution is secured yet more readily, and the effect of the present invention is yet likelier to be fully brought out.

Compounds represented by formula (2) below are preferred in terms of ease of industrial production.

In formula (2), Y represents a group selected from C=O, S=O, $S(=O)_2$, $P(=O)-R^2$ and $P(=O)-OR^3$; $R^2$ is a C1 to C20 saturated aliphatic hydrocarbon group; $R^3$ is Li, $NR^4{}_4$ or a C1 to C20 saturated aliphatic hydrocarbon group; and $R^4$ are mutually identical or different C1 to C20 saturated aliphatic hydrocarbon groups.

Specific compounds of formula (2) are set forth below.

[Chem. 65]

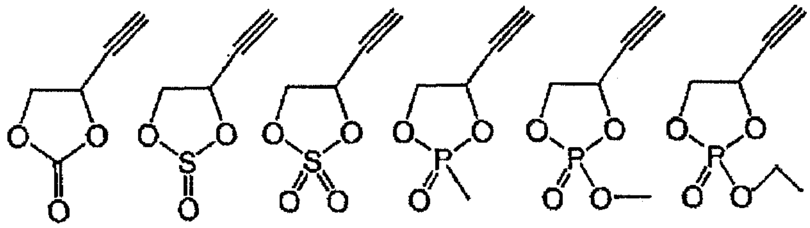

The compound represented by formula (2) may be used singly as one type, or as two or more concurrent types in any combinations and ratios. The blending amount of the compound represented by formula (2) is not particularly limited, and may be any blending amount, so long as the effect of the present invention is not significantly impaired thereby. The blending amount of the compound represented by formula (2) is preferably 0.001 wt% or greater, more preferably 0.01 wt% or greater, yet more preferably 0.1 wt% or greater, and preferably 5 wt% or smaller, more preferably 4 wt% or smaller, and more preferably 3 wt% or smaller, with respect to 100 wt% of the nonaqueous electrolyte solution. Within these ranges, a sufficient enhancing effect on cycle characteristic is readily brought out in the nonaqueous electrolyte secondary battery, and drops in high-temperature storage characteristic, such as drops in the discharge capacity retention rate, caused by an excessive gas generation amount, are readily avoided. If the blending amount is too small, the effect of the present invention may be difficult to bring out sufficiently, while if the blending amount is too large, the output and load characteristic may drop, on account of increased resistance.

As the compound represented by formula (2) there can be used a compound synthesized according to known methods, or a commercially available compound.

2-4. Compounds (A) to (C)

Preferably, the nonaqueous electrolyte solution of the present invention contains the compound represented by formula (2) and at least one type or more from among compounds (A) to (C). As a result of concomitant use of these compounds, a good composite coating having high protective power is formed on the electrode surface, and the cycle characteristic and storage characteristic of the nonaqueous electrolyte battery are significantly improved. The improvement effect is particularly pronounced under high-voltage conditions.

The nonaqueous electrolyte solution of the present invention may comprise compounds (A), (B) and (C), or a plurality of compounds belonging to (A), a plurality of compounds belonging to (B), or a plurality of compounds belonging to (C).

2-4-1. (A) compound represented by $Lia\alpha XO_nF_m$

The nonaqueous electrolyte solution of the present invention is characterized by containing the compound represented by formula (2), and a compound represented by $Li\alpha XO_nF_m$ (hereafter also referred to as compound (A)). Herein, X denotes any element of groups 13, 15 and 16 in the second or third period of the periodic table, and $\alpha$ = 1 to 2, n = 1 to 3 and m = 1 to 2.

X is preferably phosphorus or sulfur, and is, specifically, $Li_2PO_3F$, $LiPO_2F_2$, $LiSO_3F$ or the like. The compound (A) is a lithium salt, but does not come under the lithium salt set forth in "2-1. Electrolyte".

The blending amount of the compound (A) with respect to the total nonaqueous electrolyte solution of the present invention is not particularly limited, and may be any blending amount so long as the effect of the present invention is not significantly impaired thereby, but the compound (A) is present at a concentration that is ordinarily 0.001 wt% or more, preferably 0.01 wt% or more, more preferably 0.1 wt% or more, and ordinarily 15 wt% or less, preferably 12 wt% or less, and more preferably 10 wt% or less, with respect to 100 wt% of the nonaqueous electrolyte solution. If the abovementioned ranges are satisfied, the effects on output characteristic, load characteristic, low-temperature characteristic, cycle characteristic, high-temperature storage characteristic and so forth become more pronounced. If the content is excessive, battery characteristics may be impaired on account of precipitation at low temperature, while if the content is excessively small, a sufficient enhancing effect on the low-temperature characteristic, cycle characteristic, high-temperature storage characteristic and so forth may fail to be elicited.

The preparation of the electrolyte solution in a case where the latter contains the compound (A) may involve a method wherein the compound (A), synthesized separately in accordance with a known method, is added to the electrolyte solution, or a method wherein the compound (A) is generated in the electrolyte solution. In the case, for instance, of $LiPO_2F_2$, water may be caused to be present together with the below-described active material, electrode

plate and so forth, among the battery constituent elements; thereupon, $LiPO_2F_2$ can be generated within the system, during assembly of the battery, using an electrolyte solution that comprises $LiPF_6$.

The method for measuring the content of the compound (A) in the nonaqueous electrolyte solution and in the nonaqueous electrolyte battery is not particularly limited, and may be any known method. In the case, for instance, of $LiPO_2F_2$, the measurement may be performed by ion chromatography or F nuclear magnetic resonance spectroscopy (hereafter also shortened to NMR).

2-4-2. (B) compound represented by formula (3)

The nonaqueous electrolyte solution of the present invention is characterized by containing the compound represented by formula (2), and a compound represented by formula (3) (hereafter also referred to as compound (B)).

[Chem. 66]

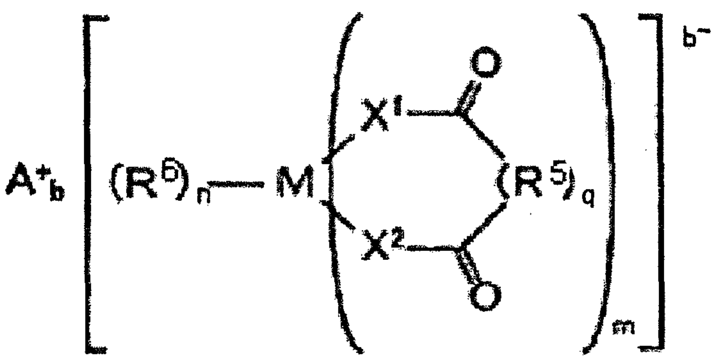

(3)

In formula (3), A represents an alkali metal; M represents a transition metal or an element of groups 13, 14 or 15 of the periodic table, and b ranges from 1 to 3, m ranges from 1 to 3, n ranges from 0 to 6, and q is 0 or 1; $R^5$ is a C1 to C10 alkylene, C1 to C10 halogenated alkylene, C6 to C20 arylene or C6 to C20 halogenated arylene ( $R^5$ that are present in a number m may be bonded to each other); $R^6$ is a halogen, a C1 to C10 alkyl, C1 to C10 halogenated alkyl, C6 to C20 aryl, C6 to C20 halogenated aryl, or $X^3R^7$ (the $R^6$ that are present in a number n may be bonded to each other to form a ring) ; $X^1$, $X^2$ and $X^3$ are O, S or $NR^8$; and $R^7$ and $R^8$ are each independently hydrogen, a C1 to C10 alkyl, C1 to C10 halogenated alkyl, C6 to C20 aryl or C6 to C20 halogenated aryl ( $R^7$ and $R^8$ that are present in plurality may be bonded to each other to form a ring).

Specific examples include, for instance, lithium bis(oxalato)borate, potassium bis(oxalato)borate, sodium bis(oxalato)borate, lithium difluorooxalatoborate, potassium difluorooxalatoborate, sodium difluorooxalatoborate, lithium tris(oxalato)phosphate, potassium tris(oxalato)phosphate, sodium tris(oxalato)phosphate, lithium difluorobis(oxalato)phosphate, potassium difluorobis(oxalato)phosphate, sodium difluorobis(oxalato)phosphate, lithium tetrafluorooxalatophosphate, potassium tetrafluorooxalatophosphate, sodium tetrafluorooxalatophosphate, lithium bis(malonato)borate, potassium bis(malonato)borate, sodium bis(malonato)borate, lithium difluoromalonatoborate, potassium difluoromalonatoborate, sodium difluoromalonatoborate, lithium tris(malonato)phosphate, potassium tris(malonato)phosphate, sodium tris(malonato)phosphate, lithium difluorobis(malonato)phosphate, potassium difluorobis(malonato)phosphate, sodium difluorobis(malonato)phosphate, lithium tetrafluoromalonatophosphate, potassium tetrafluoromalonatophosphate, sodium tetrafluoromalonatophosphate, lithium oxalatomalonatoborate, potassium oxalatomalonatoborate, sodium oxalatomalonatoborate, lithium (bisoxalato)(malonato)phosphate, lithium (oxalato)(bismalonato)phosphate, sodium (bisoxalato)(malonato)phosphate, sodium (oxalato)(bismalonato)phosphate, potassium (bisoxalato)(malonato)phosphate, potassium (oxalato)(bismalonato)phosphate, lithium difluoro(oxalato)(malonato)phosphate, potassium difluoro(oxalato)(malonato)phosphate and sodium difluoro(oxalato)(malonato)phosphate.

Particularly preferred among the foregoing are lithium bis(oxalato)borate, lithium difluorooxalatoborate, lithium tetrafluorooxalatophosphate, as well as lithium difluorobis(oxalato)phosphate and lithium tris(oxalato)phosphate set forth below. The compound (B) is a lithium salt, but does not come under the lithium salt set forth in "2-1. Electrolyte".

The compound represented by formula (3) may be used singly as one type, or as two or more concurrent types in arbitrary combinations and ratios.

[Chem. 67]

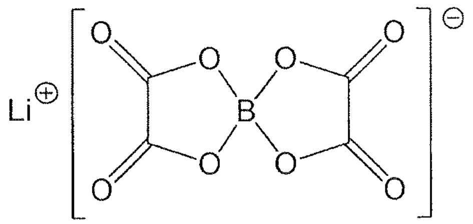

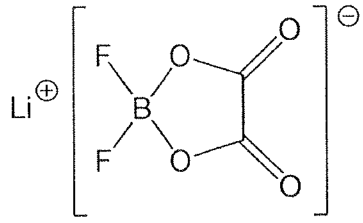

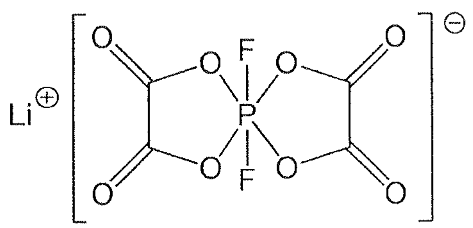

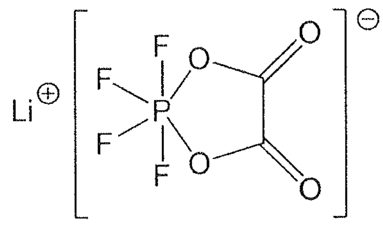

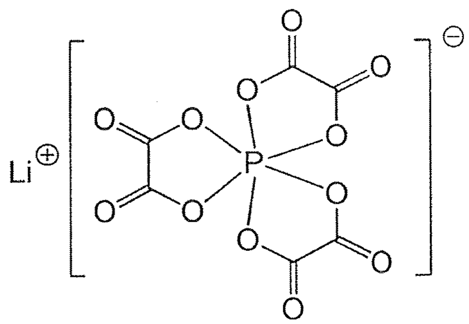

The blending amount of the compound (B) with respect to the total nonaqueous electrolyte solution of the present invention is not particularly limited, and may be any blending amount so long as the effect of the present invention is not significantly impaired thereby, but the compound (B) is present at a concentration that is ordinarily 0.001 wt% or more, preferably 0.01 wt% or more, more preferably 0.1 wt% or more, and ordinarily 15 wt% or less, preferably 12 wt% or less, and more preferably 10 wt% or less, with respect to 100 wt% of the nonaqueous electrolyte solution. If the abovementioned ranges are satisfied, the effects on output characteristic, load characteristic, low-temperature characteristic, cycle characteristic, high-temperature storage characteristic and so forth become more pronounced. If the content is excessive, battery characteristics may be impaired on account of precipitation at low temperature, while if the content is excessively small, a sufficient enhancing effect on the low-temperature characteristic, cycle characteristic, high-temperature storage characteristic and so forth may fail to be elicited.

The lithium salts represented by (A) and (B) may be used singly, or in combinations of two or more, together with the lithium salt set forth in the section "1-1. Electrolyte". Preferred examples where two or more types of (A), (B) and the lithium salt set forth in "1-1. Electrolyte" are used concomitantly include, for instance, $LiPF_6$ and $LiBF_4$; $LiPF_6$ and $FSO_3Li$; $LiPF_6$ and $LiPO_2F_2$; $LiPF_6$ and $LiN(FSO_2)_2$; $LiPF_6$ and $LiN(CF_3SO_2)_2$; $LiPF_6$ and lithium bis (oxalato) borate; $LiPF_6$ and lithium difluorooxalatoborate; $LiPF_6$ and lithium tetrafluorooxalatophosphate; $LiPF_6$ and lithium difluorobis(oxalato)phosphate; $LiPF_6$ and lithium tris (oxalato) phosphate; $LiPF_6$, $FSO_3Li$ and $LiPO_2F_2$; $LiPF_6$, $FSO_3Li$ and lithium bis(oxalato)borate; $LiPF_6$, $FSO_3Li$ and lithium tetrafluorooxalatophosphate; $LiPF_6$, $FSO_3Li$ and lithium difluorobis(oxalato)phosphate; $LiPF_6$, $FSO_3Li$ and lithium tris(oxalato)phosphate; $LiPF_6$, $LiPO_2F_2$ and lithium bis(oxalato)borate; $LiPF_6$, $LiPO_2F_2$ and lithium tetrafluorooxalatophosphate; $LiPF_6$, $LiPO_2F_2$ and lithium difluorobis(oxalato)phosphate; $LiPF_6$, $LiPO_2F_2$ and lithium tris(oxalato)phosphate and the like. The load characteristic and the cycle characteristic are thus enhanced as a result.

Particularly preferred among the foregoing is the concomitant use of, for instance, $LiPF_6$ and $FSO_3Li$; $LiPF_6$ and $LiPO_2F_2$; $LiPF_6$ and lithium bis(oxalato)borate; $LiPF_6$ and lithium tetrafluorooxalatophosphate; $LiPF_6$ and lithium tris(oxalato)phosphate; $LiPF_6$ and lithium difluorobis(oxalato)phosphate; $LiPF_6$, $FSO_3Li$ and $LiPO_2F_2$; $LiPF_6$, $FSO_3Li$

and lithium bis(oxalato)borate; $LiPF_6$, $LiPO_2F_2$ and lithium bis(oxalato)borate; $LiPF_6$ and $FSO_3Li$ and lithium tris(oxalato)phosphate; $LiPF_6$ and $FSO_3Li$ and lithium difluorobis(oxalato)phosphate; $LiPF_6$, $FSO_3Li$ and lithium tetrafluorooxalatophosphate; $LiPF_6$, $LiPO_2F_2$ and lithium tris(oxalato)phosphate; and $LiPF_6$, $LiPO_2F_2$ and lithium difluorobis(oxalato)phosphate; $LiPF_6$, $LiPO_2F_2$ and lithium tetrafluorooxalatophosphate, since the effect elicited thereby is pronounced in such cases.

In a case where $LiPF_6$ is used concomitantly with $LiBF_4$, $LiPO_2F_2$, $FSO_3Li$, $LiN(FSO_2)_2$, $LiN(CF_3SO_2)_2$, lithium bis(oxalato)borate, lithium difluorooxalatoborate, lithium tetrafluorooxalatophosphate, lithium difluorobis(oxalato)phosphate, lithium tris(oxalato)phosphate or the like, the blending amount of $LiBF_4$, $LiPO_2F_2$, $FSO_3Li$, $LiN(FSO_2)_2$, $LiN(CF_3SO_2)_2$, lithium bis(oxalato)borate, lithium difluorooxalatoborate, lithium tetrafluorooxalatophosphate, lithium difluorobis(oxalato)phosphate, lithium tris(oxalato)phosphate or the like with respect to 100 wt% of total nonaqueous electrolyte solution is not particularly limited, so long as the effect of the present invention is not significantly impaired thereby, but is ordinarily 0.01 wt% or more, preferably 0.1 wt% or more with respect to the nonaqueous electrolyte solution of the present invention, and the upper limit is ordinarily 12 wt% or less, preferably 10 wt% or less. The effect on output characteristic, load characteristic, low-temperature characteristic, cycle characteristic, high-temperature characteristic and so forth is enhanced if the blending amount lies within these ranges. If the content is excessive, battery characteristics may be impaired on account of precipitation at low temperature, while if the content is excessively small, the enhancing effect on the low-temperature characteristic, cycle characteristic, high-temperature storage characteristic and so forth may become weaker.

2-4-3. (C) Carbonate having at least one of a carbon-carbon unsaturated bond and a fluorine atom

The nonaqueous electrolyte solution of the present invention preferably contains the compound represented by formula (2) and a carbonate having at least one of a carbon-carbon unsaturated bond and a fluorine atom (hereafter, compound (C)). The compound (C) is not particularly limited, so long as it is a carbonate having a carbon-carbon unsaturated bond or fluorine atom, and may be linear or cyclic. However, the compound represented by formula (2) does not come under the compound (C).

The compound (C) may be used singly as one type, or as two or more concurrent types in arbitrary combinations and ratios.

<Unsaturated cyclic carbonate>

Examples of cyclic carbonates having a carbon-carbon unsaturated bond (hereafter also referred to as unsaturated cyclic carbonates) include, for instance, vinylene carbonate having an unsaturated bond in the skeleton of the cyclic carbonate, or ethylene carbonate substituted with an aromatic ring or a substituent having a carbon-carbon unsaturated bond, as well as phenyl carbonate, vinyl carbonate, allyl carbonate, catechol carbonate or the like.

Examples of vinylene carbonates include, for instance, vinylene carbonate, methylvinylene carbonate, 4,5-dimethylvinylene carbonate, phenylvinylene carbonate, 4,5-diphenylvinylene carbonate, vinylvinylene carbonate, 4,5-divinylvinylene carbonate, allylvinylene carbonate, 4,5-diallylvinylene carbonate and the like.

Specific examples of ethylene carbonate substituted with an aromatic ring or a substituent having a carbon-carbon unsaturated bond include, for instance, vinylethylene carbonate, 4,5-divinylethylene carbonate, 4-methyl-5-vinylethylene carbonate, 4-allyl-5-vinylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, 4-methyl-5-allylethylene carbonate or the like.

Preferred examples of unsaturated cyclic carbonates are vinylene carbonate, methylvinylene carbonate, 4,5-dimethylvinylene carbonate, vinylvinylene carbonate, 4,5-divinylvinylene carbonate, allylvinylene carbonate, 4,5-diallylvinylene carbonate, vinylethylene carbonate, 4,5-divinylethylene carbonate, 4-methyl-5-vinylethylene carbonate, allylethylene carbonate, 4,5-diallylethylene carbonate, 4-methyl-5-allylethylene carbonate and 4-allyl-5-vinylethylene carbonate, particularly preferably vinylene carbonate and vinylethylene carbonate. Using the foregoing is more appropriate, since they form a stable interface protective coating.

The unsaturated cyclic carbonate may be used singly as one type, or as two or more concurrent types in any combinations and ratios.

<Unsaturated linear carbonate>

Examples of linear carbonates having a carbon-carbon unsaturated bond (hereafter also referred to as unsaturated linear carbonates) include, for instance, linear carbonates having a carbon-carbon unsaturated bond, and linear carbonates substituted with a substituent having an aromatic ring.

Examples of linear carbonates having a linear hydrocarbon that has a carbon-carbon unsaturated bond include,

for instance, methylvinyl carbonate, ethylvinyl carbonate, divinyl carbonate, methyl-1-propenyl carbonate, ethyl-1-propenyl carbonate, di-1-propenyl carbonate, methyl(1-methylvinyl) carbonate, ethyl(1-methylvinyl) carbonate, di(1-methylvinyl) carbonate, methyl-2-propenyl carbonate, ethyl-2-propenyl carbonate, di(2-propenyl) carbonate, 1-butenyl methyl carbonate, 1-butenylethyl carbonate, di(1-butenyl) carbonate, methyl(1-methyl-1-propenyl) carbonate, ethyl(1-methyl-1-propenyl) carbonate, di(1-methyl-1-propenyl) carbonate, methyl-1-ethylvinyl carbonate, ethyl-1-ethylvinyl carbonate, di-1-ethylvinyl carbonate, methyl(2-methyl-1-propenyl) carbonate, ethyl(2-methyl-1-propenyl) carbonate, di(2-methyl-1-propenyl) carbonate, 2-butenyl methyl carbonate, 2-butenylethyl carbonate, di-2-butenyl carbonate, methyl(1-methyl-2-propenyl) carbonate, ethyl(1-methyl-2-propenyl) carbonate, di(1-methyl-2-propenyl) carbonate, methyl(2-methyl-2-propenyl) carbonate, ethyl(2-methyl-2-propenyl) carbonate, di(2-methyl-2-propenyl) carbonate, methyl(1,2-dimethyl-1-propenyl) carbonate, ethyl(1,2-dimethyl-1-propenyl) carbonate, di(1,2-dimethyl-1-propenyl) carbonate, ethynyl methyl carbonate, ethylethynyl carbonate, diethynyl carbonate, methyl-1-propynyl carbonate, ethyl-1-propynyl carbonate, di-1-propynyl carbonate, methyl-2-propynyl carbonate, ethyl-2-propynyl carbonate, di-2-propynyl carbonate, 1-butynyl methyl carbonate, 1-butynylethyl carbonate, di-1-butynyl carbonate, 2-butynyl methyl carbonate, 2-butynylethyl carbonate, di-2-butynyl carbonate, methyl(1-methyl-2-propynyl) carbonate, ethyl(1-methyl-2-propynyl) carbonate, di(1-methyl-2-propynyl) carbonate, 3-butynyl methyl carbonate, 3-butynylethyl carbonate, di-3-butynyl carbonate, methyl(1,1-dimethyl-2-propynyl) carbonate, ethyl(1,1-dimethyl-2-propynyl) carbonate, methyl(1,3-dimethyl-2-propynyl) carbonate, ethyl(1,3-dimethyl-2-propynyl) carbonate and the like.

Examples of linear carbonates substituted with a substituent having an aromatic ring include, for instance, methylphenyl carbonate, ethylphenyl carbonate, phenylvinyl carbonate, allylphenyl carbonate, ethynylphenyl carbonate, 2-propenylphenyl carbonate, diphenyl carbonate, methyl(2-methylphenyl) carbonate, ethyl(2-methylphenyl) carbonate, (2-methylphenyl)vinyl carbonate, allyl(2-methylphenyl) carbonate, ethynyl(2-methylphenyl) carbonate, 2-propenyl(2-methylphenyl) carbonate, di(2-methylphenyl) carbonate, methyl(3-methylphenyl) carbonate, ethyl(3-methylphenyl) carbonate, (3-methylphenyl)vinyl carbonate, allyl(3-methylphenyl) carbonate, ethynyl(3-methylphenyl) carbonate, 2-propenyl(3-methylphenyl) carbonate, di(3-methylphenyl) carbonate, methyl(4-methylphenyl) carbonate, ethyl(4-methylphenyl) carbonate, (4-methylphenyl)vinyl carbonate, allyl(4-methylphenyl) carbonate, ethynyl(4-methylphenyl) carbonate, 2-propenyl(4-methylphenyl) carbonate, di(4-methylphenyl) carbonate, benzyl methyl carbonate, benzylethyl carbonate, benzylphenyl carbonate, benzylvinyl carbonate, benzyl-2-propenyl carbonate, benzylethynyl carbonate, benzyl-2-propynyl carbonate, dibenzyl carbonate, methyl(2-cyclohexylphenyl) carbonate, methyl(3-cyclohexylphenyl) carbonate, methyl(4-cyclohexylphenyl) carbonate, ethyl(2-cyclohexylphenyl) carbonate, di(2-cyclohexylphenyl) carbonate and the like.

Preferred among the foregoing, as the unsaturated linear carbonate, are methylvinyl carbonate, ethylvinyl carbonate, divinyl carbonate, allyl methyl carbonate, allylethyl carbonate, diallyl carbonate, 2-propynyl methyl carbonate, 2-propynylethyl carbonate, 1-methyl-2-propynyl methyl carbonate, 1-methyl-2-propynylethyl carbonate, 1,1-dimethyl-2-propynyl methyl carbonate, dipropynyl carbonate, 2-butynyl methyl carbonate, 1-methyl-2-butynyl methyl carbonate, 1,1-dimethyl-2-butynyl methyl carbonate, dibutynyl carbonate, methylphenyl carbonate, ethylphenyl carbonate, phenylvinyl carbonate, allylphenyl carbonate, diphenyl carbonate, benzyl methyl carbonate, benzylethyl carbonate, benzylphenyl carbonate, allylbenzyl carbonate, dibenzyl carbonate, 2-propynylphenyl carbonate, 2-butynylphenyl carbonate; and particularly preferably, methylvinyl carbonate, ethylvinyl carbonate, divinyl carbonate, allyl methyl carbonate, allylethyl carbonate, diallyl carbonate, 2-propynyl methyl carbonate, 1-methyl-2-propynyl methyl carbonate, 1,1-dimethyl-2-propynyl methyl carbonate, dipropynyl carbonate, 2-butynyl methyl carbonate, 1-methyl-2-butynyl methyl carbonate, 1,1-dimethyl-2-butynyl methyl carbonate, dibutynyl carbonate, methylphenyl carbonate, ethylphenyl carbonate and diphenyl carbonate. Using the foregoing is more appropriate, since they form a stable interface protective coating.

The unsaturated linear carbonate may be used singly as one type, or as two or more concurrent types in any combinations and ratios.

<Fluorinated saturated carbonate>

As the saturated carbonate having a fluorine atom there can be used either from among a saturated linear carbonate having a fluorine atom (hereafter also referred to as fluorinated saturated linear carbonate) and a saturated cyclic carbonate having a fluorine atom (hereafter also referred to as fluorinated saturated cyclic carbonate).

The number of fluorine atoms in the fluorinated saturated linear carbonate is not particularly limited, so long as it is one or more, and is ordinarily 6 or less, preferably 4 or less. If the fluorinated saturated linear carbonate has a plurality of fluorine atoms, the latter may be mutually bonded to a same carbon, or may be bonded to different carbons. Examples of fluorinated saturated linear carbonates include, for instance, fluorinated dimethyl carbonate derivatives, fluorinated ethyl methyl carbonate derivatives, fluorinated diethyl carbonate derivatives and the like.

Examples of fluorinated dimethyl carbonate derivatives include, for instance, fluoromethyl methyl carbonate, difluoromethyl methyl carbonate, trifluoromethyl methyl carbonate, bis(fluoromethyl) carbonate, bis(difluoromethyl) carbonate, bis(trifluoromethyl) carbonate and the like.

Examples of fluorinated ethyl methyl carbonate derivatives include, for instance, 2-fluoroethyl methyl carbonate,

ethylfluoromethyl carbonate, 2,2-difluoroethyl methyl carbonate, 2-fluoroethylfluoromethyl carbonate, ethyldifluoromethyl carbonate, 2,2,2-trifluoroethyl methyl carbonate, 2,2-difluoroethylfluoromethyl carbonate, 2-fluoroethyldifluoromethyl carbonate, ethyltrifluoromethyl carbonate and the like.

Examples of fluorinated diethyl carbonate derivatives include, for instance, ethyl-(2-fluoroethyl) carbonate, ethyl-(2,2-difluoroethyl) carbonate, bis(2-fluoroethyl) carbonate, ethyl-(2,2,2-trifluoroethyl)carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, bis(2,2,2-trifluoroethyl)carbonate and the like.

Preferably, the fluorinated saturated linear carbonate is, in particular, 2,2,2-trifluoroethyl methyl carbonate and bis(2,2,2-trifluoroethyl)carbonate.

The fluorinated saturated linear carbonate may be used singly as one type, or as two or more concurrent types in any combinations and ratios.

Examples of fluorinated saturated cyclic carbonates include, for instance, derivatives of saturated cyclic carbonates having a C2 to C6 alkylene group, for instance ethylene carbonate derivatives. Examples of ethylene carbonate derivatives include, for instance, fluorinated products of ethylene carbonate and of ethylene carbonate that is substituted with an alkyl group (for instance, a C1 to C4 alkyl group). Preferred among the foregoing are ethylene carbonate derivatives having 1 to 8 fluorine atoms.

Specific examples include, for instance, monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, 4,4-difluoro-5,5-dimethylethylene carbonate and the like.

Particularly preferred as the fluorinated saturated cyclic carbonate is at least one type selected from the group consisting of monofluoroethylene carbonate, 4,4-difluoroethylene carbonate, 4,5-difluoroethylene carbonate and 4,5-difluoro-4,5-dimethylethylene carbonate. These fluorinated saturated cyclic carbonates impart high ionic conductivity and appropriately form an interface protective coating.

The fluorinated saturated cyclic carbonate may be used singly as one type, or as two or more concurrent types in any combinations and ratios.

<Fluorinated unsaturated cyclic carbonate>

Examples of the cyclic carbonate having both a carbon-carbon unsaturated bond and a fluorine atom (hereafter also referred to as fluorinated unsaturated cyclic carbonate) include, for instance, fluorinated vinylene carbonate derivatives, and fluorinated ethylene carbonate derivatives substituted with an aromatic ring or a substituent having a carbon-carbon unsaturated bond.

Examples of fluorinated vinylene carbonate derivatives include, for instance, 4-fluorovinylene carbonate, 4-fluoro-5-methylvinylene carbonate, 4-fluoro-5-phenylvinylene carbonate, 4-allyl-5-fluorovinylene carbonate, 4-fluoro-5-vinylvinylene carbonate, 4-fluoro-5-vinylvinylene carbonate, 4-allyl-5-fluorovinylene carbonate and the like.

Examples of fluorinated ethylene carbonate derivatives substituted with an aromatic ring or with a substituent having a carbon-carbon unsaturated bond include, for instance, 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-5-vinylethylene carbonate, 4,4-difluoro-5-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate, 4,5-difluoro-4,5-diallylethylene carbonate, 4-fluoro-4-phenylethylene carbonate, 4-fluoro-5-phenylethylene carbonate, 4,4-difluoro-5-phenylethylene carbonate, 4,5-difluoro-4-phenylethylene carbonate and the like.

Preferred instances of the fluorinated unsaturated cyclic carbonate are 4-fluoro-4-vinylethylene carbonate, 4-fluoro-4-allylethylene carbonate, 4-fluoro-5-vinylethylene carbonate, 4-fluoro-5-allylethylene carbonate, 4,4-difluoro-5-vinylethylene carbonate, 4,4-difluoro-5-allylethylene carbonate, 4,5-difluoro-4-vinylethylene carbonate, 4,5-difluoro-4-allylethylene carbonate, 4-fluoro-4,5-divinylethylene carbonate, 4-fluoro-4,5-diallylethylene carbonate, 4,5-difluoro-4,5-divinylethylene carbonate and 4,5-difluoro-4,5-diallylethylene carbonate. Using the foregoing is more appropriate, since they form a stable interface protective coating.

The fluorinated unsaturated cyclic carbonate may be used singly as one type, or as two or more concurrent types in any combinations and ratios.

<Fluorinated unsaturated linear carbonate>

Examples of linear carbonates having both a carbon-carbon unsaturated bond and a fluorine atom (hereafter also referred to as fluorinated unsaturated linear carbonates) include, for instance, 1-fluorovinyl methyl carbonate, 2-fluorovinyl methyl carbonate, 1,2-difluorovinyl methyl carbonate, ethyl-1-fluorovinyl carbonate, ethyl-2-fluorovinyl carbonate, ethyl-1,2-difluorovinyl carbonate, bis(1-fluorovinyl) carbonate, bis(2-fluorovinyl) carbonate, bis(1,2-difluorovinyl) carbonate, 1-fluoro-1-propenyl methyl carbonate, 2-fluoro-1-propenyl methyl carbonate, 3-fluoro-1-propenyl methyl carbonate, 1,2-difluoro-1-propenyl methyl carbonate, 1,3-difluoro-1-propenyl methyl carbonate, 2,3-difluoro-1-propenyl methyl carbonate, 3,3-difluoro-1-propenyl methyl carbonate, 1-fluoro-2-propenyl methyl carbonate, 2-fluoro-2-propenyl methyl carbonate, 3-fluoro-2-propenyl methyl carbonate, 1,1-difluoro-2-propenyl methyl carbonate, 1,2-difluoro-2-propenyl methyl carbonate, 1,3-difluoro-2-propenyl methyl carbonate, 2,3-difluoro-2-propenyl methyl carbonate, fluoroethynyl methyl carbonate, 3-fluoro-1-propynyl methyl carbonate, 1-fluoro-2-propynyl methyl carbonate, 3-fluoro-2-propynyl methyl carbonate and the like.

The fluorinated unsaturated linear carbonate may be used singly as one type, or as two or more concurrent types in any combinations and ratios.

The molecular weight of the compound (C) is not particularly limited, and may be any molecular weight, so long as the effect of the present invention is not significantly impaired thereby, but ranges preferably from 50 to 250. In the case of an unsaturated cyclic carbonate, the molecular weight ranges more preferably from 80 to 150; in the case of a fluorinated unsaturated cyclic carbonate, the molecular weight ranges more preferably from 100 to 200. Within those ranges, the solubility of the cyclic carbonate having a carbon-carbon unsaturated bond towards the nonaqueous electrolyte solution can be readily secured, and the effect of the present invention is readily brought out.

The compound (C) may be used singly as one type, or as two or more concurrent types in any combinations and ratios.

In the case of a carbonate having at least one carbon-carbon unsaturated bond, the blending amount is preferably 0.001 wt% or more, more preferably 0.01 wt% or more, yet more preferably 0.1 wt% or more, and preferably 5 wt% or less, more preferably 4 wt% or less and yet more preferably 3 wt% or less, with respect to 100 wt% of nonaqueous solvent.

In the case of a carbonate having at least one fluorine atom, the blending amount is preferably 0.01 wt% or more, more preferably 0.1 wt% or more, yet more preferably 0.2 wt% or more, and preferably 90 wt% or less, more preferably 85 wt% or less, and yet more preferably 80 wt% or less, with respect to 100 wt% of the nonaqueous electrolyte solution.

In particular, the blending amount in an instance where the carbonate having at least one fluorine atom is used as a solvent, is preferably 5 wt% or greater, more preferably 7 wt% or greater, and yet more preferably 10 wt% or greater, and preferably 90 wt% or smaller, more preferably 70 wt% or smaller and yet more preferably 50 wt% or smaller, with respect to 100 wt% of the nonaqueous electrolyte solution. Within these ranges, there can be suppressed side decomposition reactions in the nonaqueous electrolyte solution upon high-voltage operation of the battery, battery durability can be enhanced, and extreme drops in the electrical conductivity of the nonaqueous electrolyte solution can be suppressed. If used as a solvent, the carbonate having at least one fluorine atom is preferably a fluorinated saturated carbonate.

If the carbonate having at least one fluorine atom is used as an auxiliary agent, the blending amount thereof is preferably 0.01 wt% or greater, more preferably 0.1 wt% or greater, yet more preferably 0.2 wt% or greater, and preferably 5 wt% or smaller, more preferably 4 wt% or smaller, and yet more preferably 3 wt% or smaller, with respect to 100 wt% of the nonaqueous electrolyte solution. Within these ranges, durability can be enhanced without incurring excessive increases in charge transfer resistance. Charge-discharge durability at a high current density can be enhanced as a result. If the carbonate having at least one fluorine atom is used as an auxiliary agent, any one from among a fluorinated saturated carbonate, a fluorinated unsaturated cyclic carbonate and a fluorinated unsaturated linear carbonate can be used as the carbonate having at least one fluorine atom.

In a case where two or more types of carbonate having at least one fluorine atom are concomitantly used, the carbonates are preferably adjusted so as to lie within the abovementioned range.

Instances where the carbonate having at least one fluorine atom is used as a solvent and as an auxiliary agent have been explained above, but in actual use, there is no clear boundary between solvent and auxiliary agent, and the nonaqueous electrolyte solution can be prepared to any proportion.

The proportion of the blending amounts of the compound represented by formula (2) and the compound (C) is not particularly limited, but in a case where the compound (C) is a carbonate having an unsaturated bond, then $[M_{(2)}]/[M_u]$ ranges ordinarily from 100 to 0.01, more preferably from 20 to 0.05 and yet more preferably from 10 to 0.1, where $[M_u]$ denotes the total content mass of carbonate having an unsaturated bond, and $[M_{(2)}]$ denotes the total content mass of the compound represented by formula (2).

2-5. Auxiliary agents

Appropriate auxiliary agents may also be used, in accordance with the intended purpose, in the nonaqueous electrolyte battery defined in the present invention. Examples of auxiliary agents include, for instance, the below-described overcharge preventing agent, and other auxiliary agents.

<Overcharge preventing agent>

An overcharge preventing agent can be used in the nonaqueous electrolyte solution of the present invention with a view to effectively suppressing bursting/ignition of the battery, for instance in an overcharged state of the non-aqueous electrolyte battery.

Examples of overcharge preventing agents include, for instance, aromatic compounds such as biphenyl, alkyl biphenyl, terphenyl, partially hydrogenated products of terphenyl, cyclohexyl benzene, t-butyl benzene, t-amyl benzene, diphenyl ether, dibenzofuran and the like; partially fluorinated products of the abovementioned aromatic compounds, for instance 2-fluorobiphenyl, o-cyclohexylfluorobenzene, p-cyclohexylfluorobenzene or the like; or fluorine-containing anisole compounds such as 2,4-difluoroanisole, 2,5-difluoroanisole, 2,6-difluoroanisole, 3,5-difluoroanisole or the like. Preferred aromatic compounds among the foregoing are biphenyl, alkylbiphenyl, terphenyl, partially hydrogenated products of terphenyl, cyclohexylbenzene, t-butylbenzene, t-amylbenzene, diphenyl ether, di-benzofuran or the like. The foregoing may be used as a one single type or concomitantly as two or more types. When using two or more types concomitantly, then there is preferably used, in particular, a combination of cyclohexylbenzene and t-butylbenzene or t-amylbenzene; or at least one type selected from among aromatic compounds containing no oxygen atoms, for instance, biphenyl, alkylbiphenyl, terphenyl, partially hydrogenated products of terphenyl, cyclohexylbenzene, t-butylbenzene, t-amylbenzene or the like, and at least one type selected from among oxygen-containing aromatic compounds such as diphenyl ether, dibenzofuran or the like, in terms of striking a balance between the overcharge prevention characteristic and high-temperature storage characteristic.

The blending amount of the overcharge preventing agent is not particularly limited, and may be any blending amount, so long as the effect of the present invention is not significantly impaired thereby. The overcharge preventing agent is present, preferably, as 0.1 wt% or more, and 5 wt% or less, with respect to 100 wt% of the nonaqueous electrolyte solution. Within such a range, the effect elicited by the overcharge preventing agent is readily brought out at a sufficient level, and impairment of battery characteristics, for instance high-temperature storage characteristic, is readily avoided. The content of overcharge preventing agent is more preferably 0.2 wt% or more, yet more preferably 0.3 wt% or more, particularly preferably 0.5 wt% or more, and more preferably 3 wt% or less, yet more preferably 2 wt% or less.

<Other auxiliary agents>

Other known auxiliary agents may be used in the nonaqueous electrolyte solution of the present invention. Examples of other auxiliary agents include, for instance, carbonate compounds such as erythritan carbonate, spiro-bis-dimethylene carbonate, methoxyethyl-methyl carbonate and the like; carboxylic anhydrides such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride, phenylsuccinic anhydride and the like; spiro compounds such as 2,4,8,10-tetraoxaspiro[5.5]undecane and 3,9-divinyl-2,4,8,10-tetraoxaspiro[5.5]undecane; sulfur-containing compounds such as ethylene sulfite, 1,3-propanesultone, 1-fluoro-1,3-propanesultone, 2-fluoro-1,3-propanesultone, 3-fluoro-1,3-propanesultone, 1-propen-1,3-sultone, 1-fluoro-1-propen-1,3-sultone, 2-fluoro-1-propen-1,3-sultone, 3-fluoro-1-propen-1,3-sultone, 1,4-butanesultone, 1-buten-1,4-sultone, 3-buten-1,4-sultone, methyl fluorosulfonate, ethyl fluorosulfonate, methyl methanesulfonate, ethyl methanesulfonate, busulfan, sulfolane, sulfolene, diphenyl sulfone, N,N-dimethylmethane sulfoneamide, and N,N-diethylmethane sulfoneamide; nitrogen-containing compounds such as 1-methyl-2-pyrrolidinone, 1-methyl-2-piperidone, 3-methyl-2-oxazolidinone, 1,3-dimethyl-2-imidazolidinone, and N-methyl succinimide; compounds having one cyano group, such as acetonitrile, propionitrile, butyronitrile, isobutyronitrile, valeronitrile, isovaleronitrile, lauronitrile, 2-methylbutyronitrile, trimethylacetonitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, 1,2,3-propanetricarbonitrile, 1,3,5-pentanetricarbonitrile, pentafluoropropionitrile or the like; compounds having two cyano groups, such as malononitrile, succinonitrile, glutaronitrile, adiponitrile, pimelonitrile, sebaronitrile, azelanitrile, sebaconitrile, undecanedinitrile, dodecane dinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, trimethylsuccinonitrile, tetramethylsuccinonitrile, 3,3'-(ethylene dioxy)dipropionitrile, 3,3'-(ethylene dithio)dipropionitrile or the like; compounds having two isocyanate groups, such as 1,12-diisocyanatododecane, 1,11-diisocyanatoundecane, 1,10-diisocyanatodecane, 1,9-diisocyanatononane, 1,8-diisocyanatooctane, 1,7-isocyanatoheptane, 1,6-diisocyanatohexane or the like; hydrocarbon compounds such as heptane, octane, nonane, decane, cycloheptane or the like; and fluorine-containing aromatic compounds such as fluorobenzene, difluorobenzene, hexafluorobenzene, benzotrifluoride or the like. The foregoing may be used as a one single type or concomitantly as two or more types. The capacity retention characteristic after storage at high-temperature, as well as the cycle characteristic, can be enhanced through the addition

of such auxiliary agents.

The blending amount of these other auxiliary agents is not particularly limited, and may be any blending amount, so long as the effect of the present invention is not significantly impaired thereby. The content of other auxiliary agents is preferably 0.01 wt% or more, and 5 wt% or less, with respect to 100 wt% of the nonaqueous electrolyte solution. Within such a range, the effect elicited by the other auxiliary agents is readily brought out at a sufficient level, and impairment of battery characteristics such as high-load discharge characteristic is readily avoided. The blending amount of the other auxiliary agents is more preferably 0.1 wt% or more, yet more preferably 0.2 wt% or more, and more preferably 3 wt% or less, and yet more preferably 1 wt% or less.

The nonaqueous electrolyte solution described above encompasses a nonaqueous electrolyte solution that is present inside the nonaqueous electrolyte solution that is disclosed in the present invention. Specific such instances include an instance where the constituent elements of the nonaqueous electrolyte solution such as the lithium salt, the solvent, the auxiliary agents and so forth are synthesized separately, and there is prepared a nonaqueous electrolyte solution out of the substantially isolated constituent elements, and then the nonaqueous electrolyte solution is poured into a battery assembled separately, to yield a nonaqueous electrolyte solution in a nonaqueous electrolyte battery; an instance where the constituent elements of the nonaqueous electrolyte solution of the present invention are provided individually in the battery, and are then mixed within the battery, to yield as a result a composition identical to that of the nonaqueous electrolyte solution of the present invention; or an instance where the compounds that make up the nonaqueous electrolyte solution of the present invention are generated in the nonaqueous electrolyte battery, to yield thereby a composition identical to that of the nonaqueous electrolyte solution of the present invention.

3. Battery configuration

The nonaqueous electrolyte solution of the present invention is appropriate for use as an electrolyte solution for secondary batteries, for instance lithium secondary batteries, from among nonaqueous electrolyte batteries. A nonaqueous electrolyte battery that uses the nonaqueous electrolyte solution of the present invention is explained next.

The nonaqueous electrolyte secondary battery of the present invention can have a known structure, and is typically provided with a negative electrode and a positive electrode that can absorb and release ions (for instance, lithium ions), plus the above-described nonaqueous electrolyte solution of the present invention.

4. Positive electrode

<Positive electrode active material>

Positive electrode active materials that are used in the positive electrode are explained next.

(Composition)

The positive electrode active material is not particularly limited, so long as it is capable of electrochemically absorbing and releasing lithium ions, but, for instance, is preferably a substance that contains lithium and at least one transition metal. Specific examples include, for instance, lithium-transition metal complex oxides, lithium-containing transition metal phosphate compounds and the like.

Preferred examples of transition metals in lithium-transition metal complex oxides include, for instance, V, Ti, Cr, Mn, Fe, Co, Ni, Cu or the like. Specific examples include, for instance, lithium-cobalt complex oxides such a $LiCoO_2$, lithium-manganese complex oxides such as $LiMnO_2$, $LiMn_2O_4$, $Li_2MnO_4$ or the like; and lithium-nickel complex oxide such as $LiNiO_2$ or the like. In other instances, some of the transition metal atoms that are the main constituent of the lithium-transition metal complex oxide may be replaced by other metals, such as Al, Ti, V, Cr, Mn, Fe, Co, Li, Ni, Cu, Zn, Mg, Ga, Zr, Si or the like. Specific examples include, for instance, lithium-nickel-cobalt-aluminum complex oxides, lithium-cobalt-nickel complex oxides, lithium-cobalt-manganese complex oxides, lithium-nickel-manganese complex oxides and lithium-nickel-cobalt-manganese complex oxides. Preferred among the foregoing are lithium-nickel-manganese complex oxides and lithium-nickel-cobalt-manganese complex oxides, on account of the good battery characteristics that they afford.

Specific examples of substituted lithium-transition metal complex oxides include, for instance, $Li_{1+a}Ni_{0.5}Mn_{0.5}O_2$, $Li_{1+a}Ni_{0.8}Co_{0.2}O_2$, $Li_{1+a}Ni_{0.85}Co_{0.10}Al_{0.05}O_2$, $Li_{1+a}Ni_{0.33}Co_{0.33}Mn_{0.33}O_2$, $Li_{1+a}Ni_{0.45}Mn_{0.45}Co_{0.1}O_2$, $Li_{1+a}Ni_{0.475}Mn_{0.475}Co_{0.5}O_2$, $Li_{1+a}Mn_{1.8}Al_{0.2}O_4$, $Li_{1+a}Mn_2O_4$, $Li_{1+a}Mn_{1.5}Ni_{0.5}O_4$ and $xLi_2MnO_3 \cdot (1-x)Li_{1+a}MO_2$ (M = transition metal, for instance, a metal selected from the group consisting of Li, Ni, Mn and Co) and the like (where $0 < a \leq 3.0$). The ratio of substituted metal element in the composition is appropriately adjusted depending on a relationship with, for instance, material costs and battery characteristics of the battery in which the substituted metal elements are used.

The lithium-containing transition metal phosphate compound can be represented by $Li_xMPO_4$ (where M = one

element selected from the group consisting of transition metals of group 4 to group 11 of the fourth period of the periodic table; and x is $0 < x < 1.2$). Preferably, the transition metal (M) is at least one element selected from the group consisting of V, Ti, Cr, Mg, Zn, Ca, Cd, Sr, Ba, Co, Ni, Fe, Mn and Cu, more preferably at least one element selected from the group consisting of Co, Ni, Fe and Mn. Examples include, for instance, iron phosphates such as $LiFePO_4$, $Li_3Fe_2(PO_4)_3$, $LiFeP_2O_7$ or the like; cobalt phosphates such as $LiCoPO_4$; manganese phosphates such as $LiMnPO_4$; nickel phosphates such as $LiNiPO_4$; and lithium transition metal phosphate compounds wherein some of the transition metal atoms that are the main constituents of the lithium transition metal phosphate compound is substituted by another metal such as Al, Ti, V, Cr, Mn, Fe, Co, Li, Ni, Cu, Zn, Mg, Ga, Zr, Nb, Si or the like.

Suitable among the foregoing are iron phosphates such as $LiFePO_4$, $Li_3Fe_2(PO_4)_3$, $LiFeP_2O_7$ or the like, since they are unlikely to give rise to metal leaching in a high-temperature/charged state, and are inexpensive.

The abovementioned "having $Li_xMPO_4$ as a basic composition" denotes not only instances of a composition represented by that composition formula, but also instances in which some sites of Fe or the like in the crystal structure are replaced by other elements. Also, the feature "having $Li_xMPO_4$ as a basic composition" denotes not only instances of stoichiometric composition, but also instances of non-stoichiometric composition in which some elements are for instance missing. Preferred other substituting elements of Fe and the like include, for instance, Al, Ti, V, Cr, Mn, Fe, Co, Li, Ni, Cu, Zn, Mg, Ga, Zr and Si. Substitution by the abovementioned other elements, if any, ranges preferably from 0.1mol% to 5mol% yet more preferably from 0.2mol% to 2.5mol%.

The abovementioned positive electrode active material may be used singly as one type, or as two or more concurrent types.

The lithium transition metal-based compound powder of the present invention may have foreign elements introduced therein. The foreign element may be any one or more elements selected from among B, Na, Mg, Al, K, Ca, Ti, V, Cr, Fe, Cu, Zn, Sr, Y, Zr, Nb, Ru, Rh, Pd, Ag, In, Sn, Sb, Te, Ba, Ta, Mo, W, Re, Os, Ir, Pt, Au, Pb, La, Ce, Pr, Nd, Sm, Eu, Gd, Tb, Dy, Ho, Er, Tm, Yb, Lu, Bi, N, F, Cl, Br and I. The foreign elements may be incorporated into the crystal structure of the lithium transition metal-based compound, or instead of being incorporated into the crystal structure of the lithium transition metal-based compound, may be present locally concentrated, as a single element, or in the form of a compound, at, for instance, the particle surface or the grain boundaries of the lithium transition metal-based compound.

(Surface cover)

A surface cover may be used in which a substance having composition different from that of the surface of the positive electrode active material is deposited on the surface of the positive electrode active material. Examples of surface deposition substances include, for instance, oxides such as aluminum oxide, silicon oxide, titanium oxide, zirconium oxide, magnesium oxide, calcium oxide, boron oxide, antimony oxide, bismuth oxide or the like; sulfates such as lithium sulfate, sodium sulfate, potassium sulfate, magnesium sulfate, calcium sulfate, aluminum sulfate or the like; carbonates such as lithium carbonate, calcium carbonate, magnesium carbonate or the like; and carbons.

The surface deposition substances may be deposited on the positive electrode active material surface in accordance with a method that involves, for instance, dissolving or suspending the surface deposition substance in a solvent, and causing the surface deposition substance to be impregnated into/added to the positive electrode active material, followed by drying, or a method that involves dissolving or suspending a surface deposition substance precursor in a solvent, and causing the precursor to be impregnated into/added to the positive electrode active material, followed by heating or the like to elicit a reaction; or a method that involves addition of a surface deposition substance precursor to a positive electrode active material precursor, with simultaneous firing of the foregoing. In a case where carbon is to be deposited, a method may be resorted to wherein a carbonaceous substance, for instance in the form of activated carbon or the like, is mechanically deposited at a later time.

The amount of surface deposition substance is preferably, as a lower limit, 0.1 ppm or more, more preferably 1 ppm or more, yet more preferably 10 ppm or more, and, as an upper limit, is preferably 20% or less, more preferably 10% or less and yet more preferably 5% or less. The surface deposition substance allows suppressing oxidation reactions of the electrolyte solution at the positive electrode active material surface, and allows enhancing battery life. However, the effect elicited by the surface deposition substance fails to be sufficiently brought out if the deposition amount is excessively low, while if the deposition amount is excessively large, resistance may increase as a result of hindered traffic of lithium ions. The present composition ranges are accordingly preferred.

In the present invention, "positive electrode active material" denotes also a positive electrode active material such that a substance of a composition different from to that of the surface of the positive electrode active material is deposited on the surface of the positive electrode active material.

(Shape)

The shape of the particles of the positive electrode active material may be, for instance, lumpy, polyhedral, spherical, oval-spherical, plate-like, needle-like or columnar, as in conventional instances. Preferred among the foregoing, however, is a spherical to oval-spherical shape in secondary particles that are formed through aggregation of primary particles. In electrochemical elements, ordinarily, the active materials in the electrodes expand and contract accompanying charge and discharge of the element. The resulting stress is likely to result in deterioration of the active material on account of breakage or conductive path depletion. Therefore, in order to relieve stress derived from expansion and contraction and avert thereby deterioration, an active material in which secondary particles are formed through aggregation of primary particles is preferable to a single-particle active material of primary particles alone. Herein, spherical to oval-spherical particles are preferable to particles having axial orientation, such as plate-like particles or the like, since in the former case orientation during electrode molding is low, and, accordingly, expansion and contraction of the electrodes during charge and discharge is likewise low, while, moreover, homogeneous mixing with the conductive material is likelier to be achieved during production of the electrode.

(Median diameter $d_{50}$)

The median diameter $d_{50}$ of the particles of the positive electrode active material (secondary particle diameter in a case where secondary particles are formed through aggregation of primary particles) is preferably 0.1 μm or greater, more preferably 0.5 μm or greater, yet more preferably 1.0 μm or greater and most preferably 2 μm or greater, and, as an upper limit, is preferably 20 μm or smaller, more preferably 18 μm or smaller, yet more preferably 16 μm or smaller and most preferably 15 μm or smaller. Below the abovementioned lower limit, a high tap-density product may fail to be achieved, while if the upper limit is exceeded, diffusion of lithium into the particles takes a longer time; as a result, problems may arise in that battery performance is impaired, and streaks may from during production of the positive electrode of the battery, i.e. during preparation of a slurry using the active material, the conductive material, the binder and so forth, and upon coating of the slurry in the form of thin film. Fillability during production of the positive electrode can be further enhanced by mixing two or more types of positive electrode active materials having different median diameters $d_{50}$.

In the present invention, the median diameter $d_{50}$ is measured using a known laser diffraction/scattering particle size measurement instrument. In a case where LA-920, by HORIBA, is used as a particle size distribution analyzer, measurements are performed by using a 0.1 wt% aqueous solution of sodium hexametaphosphate, as the dispersion medium during measurement, and by setting the measurement refractive index to 1.24 after 5 minutes of ultrasonic dispersion.

(Average primary particle size)

In a case where secondary particles are formed through aggregation of primary particles, the average primary particle size of the positive electrode active material is preferably 0.03 μm or greater, more preferably 0.05 μm or greater, yet more preferably 0.08 μm or greater, particularly preferably 0.1 μm or greater, and, as an upper limit, is preferably 5 μm or smaller, more preferably 4 μm or smaller, yet more preferably 3 μm or smaller and most preferably 2 μm or smaller. If the abovementioned upper limit is exceeded, formation of spherical secondary particles becomes difficult, powder fillability is adversely affected, and the specific surface area decreases significantly, as a result of which the likelihood of impairment of battery performance in terms of output characteristic and the like may be very high. Below the above abovementioned lower limit, by contrast, crystals are ordinarily underdeveloped, and hence problems arise in terms of, for instance, poorer charge-discharge reversibility.

In the present invention, the primary particle size is measured through observation using a scanning electron microscope (SEM). Specifically, the largest value of a section by a left-right boundary of primary particles with respect to a straight line in the horizontal direction, is worked out, in micrographs at a 10000x magnification, for 50 arbitrary primary particles. The average of the values is taken then as the primary particle size.

<Configuration and production method of the positive electrode>

The configuration of the positive electrode is explained next. In the present invention, the positive electrode is produced by forming, onto a collector a positive electrode active material layer that contains the positive electrode active material and a binder. The positive electrode that uses a positive electrode active material can be produced in accordance with ordinary methods. Specifically, the positive electrode active material and the binder, and, as the case may require, a conductive material, a thickener and the like, are dry-mixed to yield a sheet-like mixture that is then pressure-bonded against a positive electrode collector; alternatively, these materials are dissolved or dispersed in a liquid medium, to

yield a slurry that is then coated onto a positive electrode collector, followed by drying, to form a positive electrode active material layer on the collector. The positive electrode can be obtained thereby.

The content of positive electrode active material in the positive electrode active material layer is preferably 80 wt% or more, more preferably 82 wt% or more, and particularly preferably 84 wt% or more. The upper limit is preferably 95 wt% or less, and more preferably 93 wt% or less. If the content of positive electrode active material in the positive electrode active material layer is low, electric capacity may be insufficient. If the content is too high, by contrast, the strength of the positive electrode may be insufficient.

In order to increase the packing density of the positive electrode active material, the positive electrode active material layer that is obtained by coating and drying is preferably compacted using a hand press, a roller press or the like. The density of the positive electrode active material layer is, as a lower limit, preferably 1.5 g/cm$^3$ or higher, more preferably 2 g/cm$^3$, yet more preferably 2.2 g/cm$^3$ or higher, and, as an upper limit, is preferably 4.0 g/cm$^3$ or lower, more preferably 3.8 g/cm$^3$ or lower, and yet more preferably 3.6 g/cm$^3$ or lower. Above that range, there is less penetration of the electrolyte solution up to the vicinity of the collector/active material interface; also, the charge-discharge characteristic becomes poorer, and high output may fail to be obtained, in particular at high current densities. Below the abovementioned range, conduction between active material particles drops, battery resistance increases, and high output may fail to be achieved.

(Conductive material)

Any known materials can be used as the conductive material. Specific examples thereof include, for instance, metallic materials such as copper, nickel or the like; graphite such as natural graphite, artificial graphite or the like; carbon black such as acetylene black; and carbon materials such as amorphous carbon, for instance needle coke or the like. The foregoing may be used singly as one type, or as two or more concurrent types in any combinations and ratios. The content of conductive material that is used in the positive electrode active material layer is ordinarily 0.01 wt% or more, preferably 0.1 wt% or more, more preferably 1 wt% or more and, as an upper limit, ordinarily 50 wt% or less, preferably 30 wt% or less, more preferably 15 wt% or less. If the content is lower than the abovementioned range, conduction may be insufficient. A content higher than the abovementioned range may result in lower battery capacity.

(Binder)

The binder used to produce of the positive electrode active material layer is not particularly limited, and may be any material that is dissolved or dispersed in the liquid medium that is used during electrode production, in the case of a coating method. Specific examples thereof include, for instance, resin-based polymers such as polyethylene, polypropylene, polyethylene terephthalate, polymethyl methacrylate, polyimide, aromatic polyamide, cellulose, nitrocellulose or the like; rubber-like polymers such as SBR (styrene-butadiene rubber), NBR (acrylonitrile-butadiene rubber), fluororubber, isoprene rubber, butadiene rubber, ethylene-propylene rubber or the like; thermoplastic elastomeric polymers such as styrene-butadiene-styrene block copolymers and hydrogenated products thereof, EPDM (ethylene-propylene-diene terpolymer), styrene-ethylene-butadiene-ethylene copolymers, styrene-isoprene-styrene block copolymers, or hydrogenated products thereof; hard resin-like polymers such as syndiotactic-1,2-polybutadiene, polyvinyl acetate, ethylene-vinyl acetate copolymers, propylene-$\alpha$-olefin copolymers and the like; fluoropolymers such as polyvinylidene fluoride (PVdF), polytetrafluoroethylene, fluorinated polyvinylidene fluoride, polytetrafluoroethylene-ethylene copolymers and the like; and polymer compositions having ionic conductivity towards alkali metal ions (in particular, lithium ions). These substances may be used singly as one type, or as two or more concurrent types in any combinations and ratios.

The proportion of binder in the positive electrode active material layer is ordinarily 0.1 wt% or more, preferably 1 wt% or more, and yet more preferably 3 wt% or more, and, as an upper limit, is ordinarily 80 wt% or less, preferably 60 wt% or less, yet more preferably 40 wt% or less and most preferably 10 wt% or less. If the proportion of the binder is too low, the binder may fail to sufficiently hold the positive electrode active material, the mechanical strength of the positive electrode may be insufficient, and battery performance in terms of cycle characteristic may be poorer. If the proportion of binder is excessively high, battery capacity and conduction may decrease.

(Thickener)

A thickener can be used ordinarily in order to adjust the viscosity of the slurry that is used to produce the positive electrode active material layer. If an aqueous medium is used, in particular, a slurry is preferably formed using a thickener and a latex of styrene-butadiene rubber (SBR) or the like. The thickener is not particularly limited, and specific examples thereof include, for instance, carboxymethyl cellulose, methyl cellulose, hydroxymethyl cellulose, ethyl cellulose, polyvinyl alcohol, starch oxide, phosphorylated starch, casein, as well as salts thereof. The foregoing may be used singly as one type, or as two or more concurrent types in any combinations and ratios. If a thickener is further added, then the proportion

of the thickener with respect to the active material is 0.1 wt% or more, preferably 0.5 wt% or more, and more preferably 0.6 wt% or more, and, as an upper limit, is 5 wt% or less, preferably 3 wt% or less and more preferably 2 wt% or less. Coatability may become significantly poor below that range. Above that range, the proportion of active material in the positive electrode active material layer drops, which gives rise to problems such as lower battery capacity, and greater resistance between positive electrode active material particles.

(Collector)

The material of the positive electrode collector is not particularly limited, and any known material can be used. Specific examples thereof include, for instance, metallic materials such as aluminum, stainless steel, nickel plating, titanium, tantalum or the like; and carbon materials such as carbon cloth, carbon paper or the like. Aluminum is particularly preferred from among the above metallic materials.

In a case where the collector is a metallic material, the collector may be shaped, for instance, as a metal foil, metal cylinder, metal coil, metal plate, metal thin film, expanded metal, punched metal, foamed metal or the like. In the case of a carbon material, the collector may be shaped as a carbon plate, carbon thin film, carbon cylinder or the like. A metal thin film is preferred among the foregoing. The thin film may be appropriately formed as a mesh. The thickness of the thin film may be any thickness, but is ordinarily 1 $\mu$m or greater, preferably 3 $\mu$m or greater, more preferably 5 $\mu$m or greater, and, as an upper limit, is ordinarily 1 mm or smaller, preferably 100 $\mu$m or smaller and more preferably 50 $\mu$m or smaller. The thin film may fail to be strong enough, as required for a collector, if the thin film is thinner than the abovementioned range, while handleability may be impaired if the thin film is thicker than the abovementioned range.

Preferably, a conductive aid is coated onto the surface of the collector, in terms of lowering the electron contact resistance between the collector and the positive electrode active material layer. Examples of conductive aids include, for instance, carbon and noble metals such as gold, platinum, silver or the like.

(Thickness of the positive electrode plate)

The thickness of the positive electrode plate is not particularly limited. In terms of high capacity and high output, however, the thickness of the positive electrode active material layer resulting from subtracting the thickness of the metal foil (collector) from that of the positive electrode plate, has a lower limit, with respect to one face of the collector, that is preferably 10 $\mu$m or greater, more preferably 20 $\mu$m or greater, and, as an upper limit, is preferably 500 $\mu$m or smaller and more preferably 450 $\mu$m or smaller.

(Surface cover of the positive electrode plate)

A surface cover may be used in which a substance having composition different from that of the surface of the positive electrode plate is deposited on the surface of the positive electrode plate. Examples of surface-deposited substances include, for instance, oxides such as aluminum oxide, silicon oxide, titanium oxide, zirconium oxide, magnesium oxide, calcium oxide, boron oxide, antimony oxide, bismuth oxide or the like; sulfates such as lithium sulfate, sodium sulfate, potassium sulfate, magnesium sulfate, calcium sulfate, aluminum sulfate or the like; carbonates such as lithium carbonate, calcium carbonate, magnesium carbonate or the like; and carbons.

5. Separator

Ordinarily, a separator is interposed between the positive electrode and the negative electrode, in order to prevent short-circuits. Ordinarily, the nonaqueous electrolyte solution of the present invention is used by being impregnated into such a separator.

The material and shape of the separator are not particularly limited, and any known materials and shapes may be used, so long as the effect of the present invention is not significantly impaired thereby. Among the foregoing there are preferably used, for instance, a resin, glass fibers, inorganic materials or the like that are formed out of a stable material towards the nonaqueous electrolyte solution of the present invention, in the form of a porous sheet or nonwoven fabric-like member having excellent liquid retention.

Examples of materials of resin and glass-fiber separators include, for instance, polyolefins such as polyethylene or polypropylene, aromatic polyamide, polytetrafluoroethylene, polyether sulfone, glass filters and the like. Preferred among the foregoing are glass filters and polyolefins, and yet more preferably polyolefins. These materials may be used singly as one type, or as two or more concurrent types in any combinations and ratios.

The separator may be of any thickness, but the thickness is ordinarily 1 $\mu$m or greater, preferably 5 $\mu$m or greater, more preferably 10 $\mu$m or greater, and ordinarily 50 $\mu$m or smaller, preferably 40 $\mu$m or smaller and more preferably 30 $\mu$m or smaller. The insulation properties and mechanical strength of the separator may be impaired if the

thickness thereof is excessively smaller than the abovementioned range. If the thickness is excessively greater than the abovementioned range, not only may battery performance may drop, in terms of rate characteristic and so forth, but also the energy density of the nonaqueous electrolyte secondary battery as a whole may decrease.

When using a porous separator such as a porous sheet or a nonwoven fabric, the separator may have any porosity, but the porosity is ordinarily 20% or more, preferably 35% or more, and yet more preferably 45% or more, and ordinarily 90% or less, preferably 85% or less and yet more preferably 75% or less. If the porosity is excessively smaller than the abovementioned range, membrane resistance increases, and rate characteristic tends to become poorer. If porosity is excessively greater than the abovementioned range, the mechanical strength of the separator tends to drop, and insulation properties tend to become poorer.

The separator may have any average pore diameter, but the average pore diameter is ordinarily 0.5 μm or smaller, preferably 0.2 μm or smaller and ordinarily 0.05 μm or greater. Short-circuits are likely to occur if the average pore diameter exceeds the abovementioned range. Below the abovementioned range, membrane resistance may increase, and rate characteristic may drop.

The inorganic material that is used is, for instance, an oxide such as alumina or silicon dioxide, a nitride such as aluminum nitride or silicon nitride, or a sulfate such as barium sulfate or calcium sulfate, in the form of particles or fibers.

The separator may be used in the form of a thin film of a nonwoven fabric, a woven fabric, a micro-porous film or the like. As regards thin-film shape, a thin film having a pore diameter ranging from 0.01 to 1 μm and thickness ranging from 5 to 50 μm is appropriately used. Other than the above independent thin-film shape, a separator can also be used that is obtained by forming, on the surface layer of the positive electrode and/or the negative electrode, a composite porous layer containing particles of the above-described inorganic material, using a resin binder. For instance, a porous layer can be formed, on both sides of a positive electrode, out of alumina particles such that 90%-particle size is smaller than 1 μm, using a fluororesin as a binder.

The Gurley value denotes the difficulty with which air passes in a film thickness direction, and is represented by the number of seconds that it takes for 100 ml of air to pass through the film. Therefore, a small numerical value indicates that passage is easy, whereas a large numerical value indicates that passage is difficult. Therefore, a small numerical value indicates that passage is easy, whereas a large numerical value indicates that passage is difficult. That is, a small numerical value indicates good connectedness in the thickness direction of the film, whereas a large numerical value denotes poor connectedness in the thickness direction of the film. Herein, connectedness is the degree to which pores are connected to each other in the film thickness direction. The separator of the present invention can be used in many applications if the Gurley value of the separator is low. In a case where, for instance, the separator is used as a separator of a nonaqueous lithium secondary battery, the Gurley value is preferably low, since in that case lithium ions can move easily, and battery performance is superior. The separator may have any Gurley value, but the latter ranges preferably from 10 to 1000 sec/100 ml, more preferably from 15 to 800 sec/100 ml and yet more preferably from 20 to 500 sec/100 ml. In a preferred separator, the Gurley value thereof is no greater than 1000 sec/100 ml, since in that case electric resistance is substantially low.

6. Battery design

<Electrode group>

The electrode group may be a stacked structure in which the above-described separator is interposed between the above-described positive electrode plate and negative electrode plate, or a structure wherein the above-described positive electrode plate and negative electrode plate are wound spirally, with the above-described separator interposed in between. The proportion of the volume of the electrode group in the internal volume of the battery (hereafter, referred to as electrode group occupancy rate) is ordinarily 40% or more, preferably 50% or more, and ordinarily 90% or less, preferably 80% or less.

Battery capacity decreases if the electrode group occupancy rate is below the abovementioned range. If the abovementioned range is exceeded, void spaces are fewer, and when the battery reaches a high temperature, various members expand, and the internal pressure rises through increased vapor proportion of the liquid components of the electrolyte, various battery characteristics are impaired, for instance charge-discharge repetition performance and high-temperature storage, and in some instances there operates a gas release valve that relieves internal pressure to the exterior.

<Outer case>

The material of the outer case is not particularly limited, so long as it is a substance that is stable in the nonaqueous electrolyte solution that is used. Specific examples of the material that can be used include, for instance, metals such as nickel-plated steel plate, stainless steel, aluminum or aluminum alloys, magnesium alloys or the like; or

a multilayer film (laminate film) of resin and aluminum foil. A metal such as aluminum or aluminum alloy, or a laminate film, are appropriately used from the viewpoint of achieving lighter weights.

Examples of outer cases that utilize metals include, for instance, outer cases having an airtight sealed structure resulting from welding metals together by laser welding, resistance welding, ultrasonic welding or the like. In an alternative structure, the metals may be crimped to each other with a resin-made gasket interposed in between. Examples of an outer case that utilizes the abovementioned laminate film include, for instance, outer cases having an airtight sealed structure through thermal pressure-bonding of resin layers to each other. In order to enhance sealability, a resin that is different from that of the resins used in the laminate film may be interposed between the abovementioned resin layers. In the particular case of a sealed structure resulting from thermal pressure-bonding of resin layers with interposed collecting terminals, metal and resin are joined to each other, and hence a resin having polar groups or a resin that is modified through introduction of polar groups is appropriately used as the interposed resin.

<Protective element>

As the protective element there can be used, for instance, a PTC (positive temperature coefficient) in which resistance increases upon abnormal heat generation or upon excessive current flow, a temperature fuse, a thermistor, or a valve (current shutoff valve) that shuts off current that flows in a circuit when the internal pressure and/or internal temperature in the battery rise suddenly upon abnormal heat generation. As the protective element there is preferably selected a protective element that is in an inoperative condition during ordinary use with high current. More preferably, the battery is designed so that abnormal heat generation or thermal runaway does not occur even in the absence of the protective element.

<Outer package>

The nonaqueous electrolyte secondary battery of the present invention is ordinarily configured by housing the above-described nonaqueous electrolyte solution, negative electrode, positive electrode, separator and so forth inside an outer package. The outer package is not particularly limited, and any known outer package can be used, so long as the effect of the present invention is not significantly impaired thereby. Specifically, the outer package may be of any material, but ordinarily there is used, for instance, nickel-plated iron, stainless steel, aluminum or alloys thereof, nickel, titanium or the like.

The shape of the outer package may be any shape. For instance the outer package may be of cylindrical type, box-like type, laminate type, coin type, large type and the like.

7. Battery performance

The battery obtained by virtue of the present invention can be used without particular limitations, but can preferably used in high-voltage and high-capacity batteries.

Herein, high voltage denotes, for instance, ordinarily 4.25 V or higher, preferably 4.3 or higher, in the case of lithium ion secondary batteries.

High capacity denotes, for instance, ordinarily 2600 mAh or higher, preferably 2800 mAh or higher, and more preferably 3000 mAh or higher in the case of a 18650-type battery.

Examples

The present invention will be explained in more detail next based on examples and comparative examples. However, the present invention is not limited to these examples.

The compound represented by formula (2) used in the present examples was synthesized according to the method described below.

[Compound I]

Starting material 1) was synthesized in accordance with the method of Non-Patent Document (Journal of Organic Cehmistry, 56(3), 1083-1088 (1991)). Next, compound I was obtained in accordance with the method set forth in Non-Patent Document (European Journal of Organic Chemistry, 2009(20), 2836-2844).

[Chem. 68]

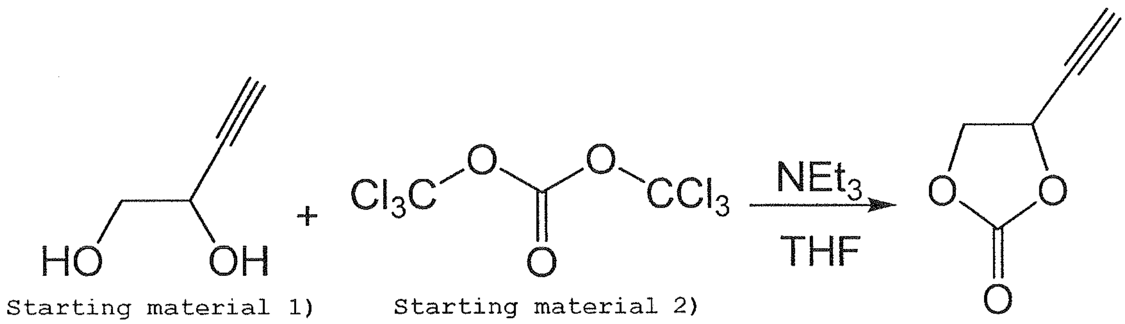


Compound I

[Compound II]

Under a nitrogen stream, starting material 1) was dissolved in methylene chloride, and a methylene chloride solution of starting material 3) was dripped. After 3 hours of stirring at room temperature, water was added to stop the reaction, and the organic layer was washed with saturated aqueous sodium bicarbonate-water, followed by drying with magnesium sulfate, and solvent removal under reduced pressure, to yield intermediate 1). Intermediate 1) was dissolved in acetonitrile. To the resulting solution there were sequentially added, under ice-cooling, an aqueous solution resulting from dissolving a catalytic amount of ruthenium chloride, and sodium periodate, with stirring for 1 hour. Diethyl ether and saturated aqueous sodium bicarbonate were then added, and the organic layer was extracted. After drying with sodium sulfate, the product was purified by silica-gel column chromatography, to yield compound II.

[Chem. 69]

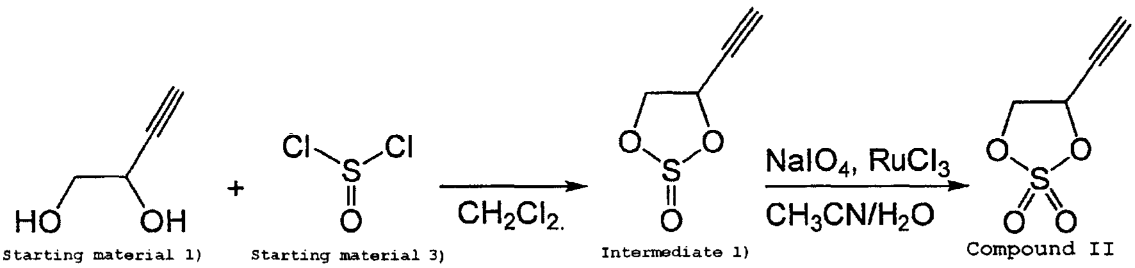


[Compound III]

Under a nitrogen stream, starting material 1) was dissolved, and the resulting solution was basified through addition of triethylamine. Thereafter, a tetrahydrofuran solution of starting material 4) was dripped. This was followed by 2 hours of stirring at room temperature. The resulting white powder precipitate was filtered off, and the solvent was removed then under reduced pressure, to yield compound III.

[Chem. 70]

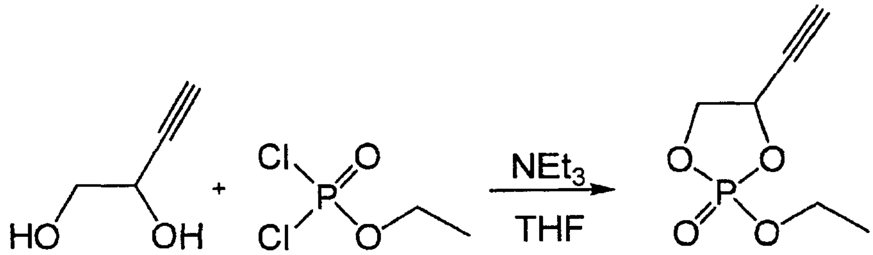


Starting material 1) Starting material 4) Compound III

The spectral data of compounds I to III are as follows.

[Table 1]

Table 1

| Compound | Mass spectrum CI, m/s | Mass spectrum EI, m/z | $^1$H NMR in $CDCl_s$ ppm vs TMS |
|---|---|---|---|
| Compound I 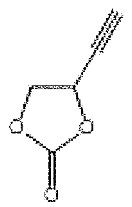 | | 112[$M^+$]<br>52 [$C_4H_4$] | 2.80(1H)<br>4.39-4.44(1H)<br>4.64-4.68(1H)<br>5.30-5.34(1H) |
| Compound II 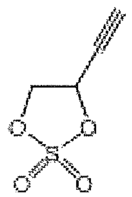 | 166 [$M+NH_4^+$] | 102 [$C_8H_2O_2S$]<br>52 [$C_4H_4$] | 2.96(1H)<br>4.18-4.64(2H)<br>5.04-5.29(1H) |
| Compound III 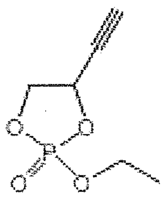 | 177 [$M+H^+$] | 132 [$C_4H_3O_3$]<br>68 [$C_4H_4O$]<br>52 [$C_4H_4$] | 2.76(1H)<br>4.21-4.61(2H)<br>5.10-5.25(1H) |

<Example 1>

[Negative electrode]

A spheroidized natural graphite mixture having the properties below was used as the negative electrode active material. Specifically, a spheroidized natural graphite mixture was used in which the rhombohedral rate in the negative electrode active material, as measured in accordance with the above-described method, was 25%, the aspect ratio was 8.4, the d-value (interlayer distance) of lattice planes (002 planes) was 0.336 nm, the crystallite size Lc and La was 100 nm or greater, the volume-average particle diameter was 21.8 μm, the BET specific surface area was 5.0 $m^2$/g, the tap density was 1.00 $g \cdot cm^{-3}$, the Raman R value was 0.21, and the powder orientation rate was 0.25. As the spheroidized natural graphite mixture there was used a mixture of spheroidized natural graphite particles and a product resulting from thermal treatment of spheroidized natural graphite particles at 1000°C, in a weight proportion of 1:1.

A slurry was formed by adding 100 parts by weight of an aqueous dispersion of sodium carboxymethyl cellulose (concentration of sodium carboxymethyl cellulose 1 wt%), and 1 part by weight of an aqueous dispersion of styrene-butadiene rubber (styrene-butadiene rubber concentration 50 wt%), as a thickener and a binder, respectively, to 98 parts by weight of the negative electrode active material, with mixing in a disperser. The obtained slurry was coated onto an 18 $\mu$m-thick copper foil, was dried, and was rolled using a press, to yield an electrode density of 1.7 g/cm$^3$. The rolled product was cut and was used as the negative electrode.

[Positive electrode]

A slurry was formed by mixing, in an N-methyl pyrrolidone solvent, 90 wt% of $LiCoO_2$, as a positive electrode active material, 5 wt% of acetylene black, as a conductive material, and 5 wt% of polyvinylidene fluoride, as a binder. The obtained slurry was coated onto a 15 $\mu$m-thick aluminum foil, was dried, and was rolled using a press. The rolled product was cut and was used as the positive electrode.

[Electrolyte solution]

A base electrolyte solution was prepared by dissolving dried $LiPF_6$ in a mixture of monofluoroethylene carbonate and dimethyl carbonate (volume ratio 30:70), to a proportion of 1 mol/L, in a dry argon atmosphere. The compounds set forth in Table 2 were mixed into this base electrolyte solution, in the proportions set forth in the table, to yield electrolyte solutions.

[Lithium secondary battery]

The above-described positive electrode, negative electrode, and a polyethylene separator were sequentially stacked, in the order negative electrode, separator and positive electrode, to produce a battery element.
The battery element was inserted into a bag comprising a laminate film in which aluminum (thickness 40 $\mu$m) was covered, on both sides, by a resin layer, while causing the terminals of the positive electrode and the negative electrode to be disposed protrusively. Thereafter, each electrolyte solution set forth in Table 2 was poured into a bag, which was then vacuum-sealed, to prepare a sheet-like battery.

[Running-in operation]

Each lithium secondary battery was subjected to a running-in operation at constant current equivalent to 0.2C, at 25°C, with the lithium secondary battery sandwiched between glass plates, in order to increase adhesion between electrodes.

[Cycle characteristic evaluation]

Each battery having undergone the running-in operation underwent then one cycle of being charged, at constant current, at 0.5 C, at 45°C, and being thereafter discharged, at constant current, at 0.5 C; this process was carried out over 100 cycles. Herein, 1 C represents the current value for discharge of the reference capacity of the battery over 1 hour, 5 C represents a 5-fold current value of 1 C, and 0.2 C represents a current value that is 1/5 of 1 C. The discharge capacity retention rate was worked out based on the expression (100-th cycle discharge capacity)/(1st cycle discharge capacity)$\times$100.

[Evaluation of high-temperature storage characteristic]

Each battery having undergone the running-in operation was charged at 0.2 C constant current, at 25°C. Thereafter, the battery was stored for 24 hours at 85°C, and was cooled down to room temperature. Thereafter, the volume was measured through immersion in an ethanol bath, to work out the amount of gas generated, on the basis of changes in volume before and after high-temperature storage.

<Example 2>

A battery was assembled using the same negative electrode and positive electrode as in Example 1, but herein the compound comprised in the electrolyte solution given in Table 2 was modified. The battery characteristics (capacity retention rate alone) were worked out in the same way as above.

<Example 3>

A battery was assembled using the same negative electrode and positive electrode as in Example 1, but herein the compound comprised in the electrolyte solution given in Table 2 was modified. The battery characteristics (capacity retention rate alone) were worked out in the same way as above.

<Example 4>

A battery was assembled using the same and positive electrode and electrolyte solution (including compounds) as in Example 1, but herein there was used, as the negative electrode active material, a mixture of spheroidized natural graphite and a below-described composite resulting from coating spheroidized natural graphite with carbon.

Specifically, there was used a mixture (comprising spheroidized natural graphite and a composite of spheroidized natural graphite covered with carbon) such that the rhombohedral rate in the negative electrode active material was 26%, the aspect ratio was 8.0, the d-value (interlayer distance) of lattice planes (002 planes) was 0.336 nm, the crystallite size Lc and La was 100 nm or greater, the volume-average particle diameter was 18.8 μm, the BET specific surface area was 3.8 $m^2/g$, the tap density was 1.03 $g \cdot cm^{-3}$, the Raman R value was 0.22, and the powder orientation rate was 0.36, as measured in accordance with the above-described methods.

In the composite of spheroidized natural graphite covered with carbon there was used a material obtained by firing a carbon precursor, and thereafter, covering the spheroidized natural graphite to 3 wt% (coverage), with firing at 1300°C. A mixture of the carbon-covered composite with spheroidized natural graphite, at a 1:1 weight proportion, was used as the negative electrode active material.

<Example 5>

A battery was assembled using the same positive electrode and electrolyte solution (including compounds) as in Example 1, but herein there was used, as the negative electrode active material, a mixture of a below-described composite having a rhombohedral rate of 7% and in which spheroidized natural graphite was covered with graphite, and spheroidized natural graphite having a rhombohedral rate of 21%. The battery characteristics were worked out in the same way as above.

Specifically, there was used a mixture (comprising spheroidized natural graphite and a composite of spheroidized natural graphite covered with graphite) in which the rhombohedral rate in the negative electrode active material was 13%, the aspect ratio was 4.1, the d-value (interlayer distance) of lattice planes (002 planes) was 0.336 nm, the crystallite size Lc and La was 100 nm or greater, the volume-average particle diameter was 19.1 μm, the BET specific surface area was 4.3 $m^2/g$, the tap density was 1.10 $g \cdot cm^{-3}$, and the Raman R value was 0.17, as measured in accordance with the above-described methods.

In the composite of spheroidized natural graphite covered with graphite there was used a material obtained by firing a carbon precursor, and thereafter, covering the spheroidized natural graphite to 15 wt% (coverage), with firing at 3000°C. A mixture of the graphite-covered composite with spheroidized natural graphite, at a 6:4 weight proportion, was used as the negative electrode active material.

<Reference Example 1>

A battery was assembled using the same positive electrode and electrolyte solution (including compounds) as in Example 1, but herein the below-described natural graphite was used as the negative electrode active material. The battery characteristics (capacity retention rate alone) were worked out in the same way as above.

Specifically, natural graphite was used such that the rhombohedral rate in the negative electrode active material was 38%, the aspect ratio was 5.6, the d-value (interlayer distance) of lattice planes (002 planes) was 0.336 nm, the crystallite size Lc and La was 100 nm or greater, the volume-average particle diameter was 7.0 μm, the BET specific surface area was 11.2 $m^2/g$, and the Raman R value was 0.37, as measured in accordance with the above-described methods.

<Comparative Example 1>

A battery was assembled using the same negative electrode and positive electrode as in Example 1, but herein the compound comprised in the electrolyte solution given in Table 2 was modified. The battery characteristics (capacity retention rate alone) were worked out in the same way as above.

<Comparative Example 2>

A battery was assembled using the same negative electrode and positive electrode as in Example 1, but herein the compound comprised in the electrolyte solution given in Table 2 was modified. The battery characteristics (capacity retention rate alone) were worked out in the same way as above.

<Comparative Example 3>

A battery was assembled using the same negative electrode and positive electrode as in Example 1, but herein the compound comprised in the electrolyte solution given in Table 2 was modified. The battery characteristics were worked out in the same way as above.

Table 2 sets forth the powder properties of the negative electrode active material, the compounds comprised in the electrolyte solution, and battery characteristics, for Examples 1 to 5, Comparative Examples 1 to 3 and Reference Example 1.

[Table 2]

Table 2

| | Electrolyte solution | | | | Negative electrode active material | | | | | | | Battery characteristics | |
|---|---|---|---|---|---|---|---|---|---|---|---|---|---|
| | Compound of formula (2) | | Compound other than formula (2) | | Rhombohedral rate (%) | Aspect ratio (major axis / minor axis) | d002 (nm) | Particle diameter (μm) | BET ($m^2/g$) | Tap density ($g/cm^3$) | Raman value | Capacity retention rate (%) | Gas generation amount (ml) |
| | Structural formula | Parts by weight | structural formula | Parts by weight | | | | | | | | | |
| Example 1 | 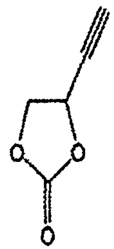 | 2.0 | 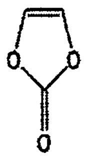 | - | 25 | 8.4 | 0.336 | 21.8 | 5.0 | 1.00 | 0.21 | 90 | 0.28 |
| Example 2 | | 1.0 | | 1.0 | 25 | 8.4 | 0.336 | 21.8 | 5.0 | 1.00 | 0.21 | 91 | Not performed |
| Example 3 | | 0.3 | | 1.0 | 25 | 8.4 | 0.336 | 21.8 | 5.0 | 1.00 | 0.21 | 91 | Not performed |
| Example 4 | | 2.0 | | - | 26 | 8.0 | 0.336 | 18.8 | 3.8 | 1.03 | 0.22 | 90 | 0.25 |
| Example 5 | | 1.0 | | 1.0 | 13 | 4.1 | 0.336 | 19.1 | 4.3 | 1.10 | 0.17 | 92 | 0.29 |
| Reference Example 1 | | 2.0 | | - | 38 | 5.6 | 0.336 | 7.0 | 11.2 | - | 0.37 | 85 | Not performed |
| Comparative Example 1 | | - | | - | 25 | 8.4 | 0.336 | 21.8 | 5.0 | 1.00 | 0.21 | 69 | Not performed |
| comparative Example 2 | | - | | 1.0 | 25 | 8.4 | 0.336 | 21.8 | 5.0 | 1.00 | 0.21 | 76 | Not performed |
| Comparative Example 3 | | - | | 2.0 | 25 | 8.4 | 0.336 | 21.8 | 5.0 | 1.00 | 0.21 | 84 | 0.51 |

※ Charge voltage before high-temperature storage test was set to 4.3V.

※ Charge voltage during cycling was set to 4.3V, discharge voltage to 3.0V

As Table 2 shows, the cycle capacity retention rate and suppression of gas generation amount during high-temperature storage are superior in instances where there is used a nonaqueous electrolyte solution that contains the compound of formula (2) (Examples 1 to 5), than in instances where there is used a nonaqueous electrolyte solution that does not contain the compound of formula (2) (Comparative Example 1), and instances where there is used a nonaqueous electrolyte solution containing compounds other than the compound of formula (2) (Comparative Examples 2 and 3), in a battery that uses a negative electrode having a rhombohedral rate that lies within the range of the present invention. It is deemed that the reason why that superior battery durability is elicited is that, during charge and discharge, the compound of formula (2) in the nonaqueous electrolyte solution forms an effective coating film, capable of preventing impairment of battery characteristics, on the negative electrode surface that uses the negative electrode active material having a specific rhombohedral rate.

The effect on the cycle capacity retention rate is elicited also in a case where the nonaqueous electrolyte solution containing the compound of formula (2) is combined with a negative electrode having a rhombohedral rate which lies outside the range of the present invention (Reference Example 1). When compared with an instance (Example 1) in which there is used a negative electrode having a rhombohedral rate that lies within the range of the present invention, however, it is found that the present invention is superior in terms of cycle capacity retention rate and in terms of curbing gas generation amount.

<Example 6 and Comparative Examples 4 and 5>

[Negative electrode]

A negative electrode produced in accordance with the same method as in Example 1 was used, but herein, spheroidized graphite particles having the below-described properties were used as the negative electrode active material. Specifically, graphite particles were used such that the rhombohedral rate in the negative electrode active material was 4%, the aspect ratio was 4.9, the d-value (interlayer distance) of lattice planes (002 planes) was 0.3354 nm, the crystallite size Lc and La was 100 nm or greater, the volume-average particle diameter was 22 $\mu$m, the BET specific surface area was 4.2 $m^2/g$, the tap density was 1.09 $g{\cdot}cm^{-3}$ and the Raman R value was 0.04, as measured in accordance with the above-described methods.

[Positive electrode]

A positive electrode produced in accordance with the same method of Example 1 was used herein.

[Electrolyte solution]

A base electrolyte solution was prepared by dissolving dried $LiPF_6$ in a mixture of ethylene carbonate and dimethyl carbonate (volume ratio 30:70), to a proportion of 1 mol/L, in a dry argon atmosphere. The compounds set forth in Table 3 were mixed into this base electrolyte solution, in the proportions set forth in the table, to yield electrolyte solutions.

[Lithium secondary battery]

Lithium secondary batteries were produced accordance with same method as in Example 1.

[Evaluation of durability properties]

Each battery having completed a running-in operation under the same conditions as in Example 1, underwent one cycle of being charged at constant current, at 0.2 C, at 25°C, being thereafter stored at 85°C for 24 hours, being then charged at constant current, at 0.5 C, at 45°C, and being thereafter discharged, at constant current, at 0.5 C. This cycle was repeated over 6 cycles. The n-th cycle capacity retention rate was worked out based on the calculation expression (n-th cycle discharge capacity)/(1st cycle discharge capacity) $\times$ 100. The evaluation results are given in Table 3.
[Table 3]

Table 3

| | Electrolyte solution | | | | Battery characteristics | | |
|---|---|---|---|---|---|---|---|
| | Compound of formula (2) | | compound other than formula (2) | | Capacity retention rate (%) | | |
| | Structural formula | Parts by weight | Structural formula | Parts by weight | 2nd cycle | 4th cycle | 6th cycle |
| Example 6 | 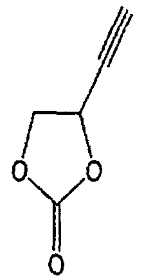 | 0.5 | 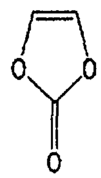 | - | 99 | 98 | 95 |
| Comparative Example 4 | | - | | 2.0 | 93 | 83 | 79 |
| Comparative Example 5 | | - | | - | 95 | 80 | 63 |
| ※ Charge voltage before high-temperature storage test was set to 4.3V.<br>※ Charge voltage during cycling was set to 4.3V, discharge voltage to 3.0V. | | | | | | | |

As Table 3 shows, using a negative electrode wherein the nonaqueous electrolyte solution contained the compound of formula (2) and the rhombohedral rate lay within the range of the present invention did not result in a marked decrease in the capacity retention rate, even in a lithium secondary battery that had completed the high-temperature storage test (Example 6). On the other hand, instances where compounds other than the compound of formula (2) were used, and instances where no additive was added, resulted in a significant drop in the capacity retention rate accompanying increased charge-discharge cycling (Comparative Examples 4 and 5), even when using a negative electrode that lay within the range of the present invention.

The reason for the significantly superior effect elicited in Example 6, even under harsh conditions of having completed the high-temperature storage test as described above, is deemed to derive from the fact that the compound of formula (2) in the nonaqueous electrolyte solution forms, during charge and discharge, an effective coating film, capable of preventing impairment of battery characteristics, on the surface of the negative electrode surface that uses a negative electrode active material having a specific rhombohedral rate.

<Examples 7 to 9 and Comparative Examples 6 and 7>

[Negative electrode]

A below-described composite in which the below-described spheroidized natural graphite was covered with amorphous carbon was used as the negative electrode active material. Specifically, graphite particles in which natural graphite was covered with amorphous carbon were used such that the rhombohedral rate in the negative electrode active material, as measured in accordance with the above-described method, was 0.30%, the aspect ratio was 4.2, the d-value (interlayer distance) of lattice planes (002 planes) was 0.3355 nm, the crystallite size Lc and La was 100 nm or greater, the volume-average particle diameter was 11.6 μm, the BET specific surface area was 3.4 $m^2/g$, the tap density was 0.99 $g \cdot cm^{-3}$ and the Raman R value was 0.32.

In the composite of spheroidized natural graphite covered with carbon there was used a material obtained by firing a carbon precursor, and thereafter, covering the spheroidized natural graphite to 3 wt% (coverage), with firing at 1100°C.

A slurry was formed by adding 100 parts by weight of an aqueous dispersion of sodium carboxymethyl cellulose (concentration of sodium carboxymethyl cellulose 1 wt%), and 1 part by weight of an aqueous dispersion of styrene-butadiene rubber (styrene-butadiene rubber concentration 50 wt%), as a thickener and a binder, respectively, to 98 parts by weight of the negative electrode active material, with mixing in a disperser. The obtained slurry was coated onto an 18 μm-thick copper foil, was dried, and was rolled using a press, to yield an electrode density of 1.45 $g/cm^3$. The rolled product was cut and was used as the negative electrode.

[Positive electrode]

A slurry was formed by mixing, in an N-methyl pyrrolidone solvent, 90 wt% of $Li(Ni_{1/3}Mn_{1/3}Co_{1/3})O_2$, as a positive electrode active material, 5 wt% of acetylene black, as a conductive material, and 5 wt% of polyvinylidene fluoride, as a binder. The obtained slurry was coated onto a 15 μm-thick aluminum foil, was dried, and was rolled using a press. The rolled product was cut and was used as the positive electrode.

[Electrolyte solution]

A base electrolyte solution was prepared by dissolving dried $LiPF_6$ in a mixture of monofluoroethylene carbonate, dimethyl carbonate and ethyl methyl carbonate (volume ratio 30:30:40), to a proportion of 1 mol/L, in a dry argon atmosphere. The compounds set forth in Table 4 were mixed into this base electrolyte solution, in the proportions set forth in the table, to yield electrolyte solutions.

[Lithium secondary battery]

Lithium secondary batteries were produced in accordance with same method as in Example 1.

[Cycle characteristic evaluation]

Each battery having completed a running-in operation under the same conditions as in Example 1, underwent one cycle of being charged at constant current, at 2 C, at 60°C, and being thereafter discharged, at constant current, at 2 C. This cycle was repeated over 300 cycles. The 100-th cycle capacity retention rate was worked out based on the calculation expression (100-th cycle discharge capacity)/(1st cycle discharge capacity) × 100. The evaluation results are given in Table 4.
[Table 4]

Table 4

| | Electrolyte solution | | | | | | Battery characteristics |
|---|---|---|---|---|---|---|---|
| | Compound of formula (2) | | Compound other than formula (2), 1 | | Compound other than formula (2), 2 | | Capacity retention rate (%) |
| | Structural formula | Part by weight | Structural formula | Part by weight | structural formula | Part by weight | |
| Example 7 | 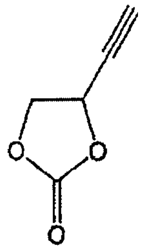 | 1.0 | 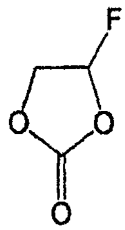 | 33.4 | - | - | 84.5 |
| Example 8 | 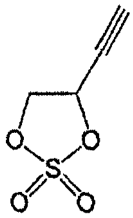 | 1.0 | | 33.4 | - | 1.0 | 82.6 |
| Example 9 | 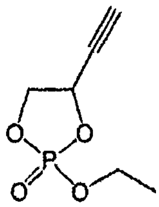 | 1.0 | | 33.4 | - | 1.0 | 82.5 |
| Comparative Example 6 | - | - | | 33.4 | 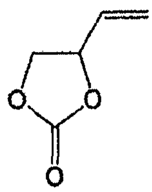 | - | 79.6 |
| Comparative' Example 7 | - | - | | 33.7 | - | - | 78.5 |
| ※ Charge voltage during cycling was set to 4.4V, discharge voltage to 3.0V. | | | | | | | |

As Table 4 shows, instances where there is used a nonaqueous electrolyte solution that contains the compound of formula (2) (Examples 7 to 9) result in a better high-temperature cycle capacity retention rate than instances where there is used a nonaqueous electrolyte solution that does not contain the compound of formula (2) (Comparative Example 7), or an instance where there is used a nonaqueous electrolyte solution that contains a compound other than the compound of formula (2) (Comparative Example 6), in batteries that utilize a negative electrode such that the rhombohedral rate lies within the range of the present invention. Thus, a distinctive effect on battery durability is elicited by using any compound, so long as the compound is the compound represented by formula (2). However, in a case where a compound is used (Comparative Example 6) that has an exocyclic carbon-carbon double bond, even if the compound has multiple exocyclic binding sites, as in formula (2), the durability-enhancing effect becomes significantly weaker as

compared with that of Examples 7 to 9, even when using a negative electrode having a rhombohedral rate that lies within the range of the present invention. The reason for the superior cycle capacity retention rate that is elicited is deemed to derive from the fact that the compound of formula (2) in the nonaqueous electrolyte solution forms, during charge and discharge, an effective coating film, capable of preventing impairment of battery characteristics, on the surface of the negative electrode surface that uses a negative electrode active material having a specific rhombohedral rate.

<Examples 10 to 13 and Comparative Examples 8 and 9>

[Electrolyte solution]

A base electrolyte solution was prepared by dissolving dried $LiPF_6$ in a mixture of ethylene carbonate, dimethyl carbonate and ethyl methyl carbonate (volume ratio 30:30:40), to a proportion of 1 mol/L, in a dry argon atmosphere. The compounds set forth in Table 5 were mixed into this base electrolyte solution, in the proportions set forth in the table, to yield electrolyte solutions.

[Production of a lithium secondary battery]

Sheet-like batteries were produced in the same way as in Example 1, using a positive electrode as that of Example 7 and a negative electrode as that of Example 7.

[Evaluation of high-temperature storage characteristic]

The capacity of each battery having completed a running-in operation under the same conditions as in Example 1 was checked at constant current equivalent to 0.2 C, at 25°C. Thereafter, the battery was charged at constant current equivalent to 0.2 C, and was stored at 75°C for 120 hours. The battery was cooled down to room temperature, was discharged thereafter at constant current equivalent to 0.2 C, and the discharge capacity was worked out. The capacity retention rate was worked out based on the calculation expression (discharge capacity after storage)/(discharge capacity before storage) × 100. The results are given in Table 5.
[Table 5]

Table 5

| | Electrolyte solution | | | | Battery characteristics |
|---|---|---|---|---|---|
| | Compound of formula (2) | | Compound other than formula (2) | | Capacity retention rate (%) |
| | Structural formula | Parts by weight | Structural formula | Parts by weight | |
| Example 10 | 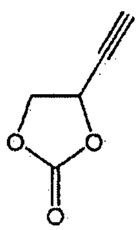 | 0.5 | $LiPO_2F_2$ | 1.0 | 81.5 |
| Example 11 | | 0.5 | $LiSO_3F$ | 1.0 | 81.7 |
| Example 12 | | 0.5 | 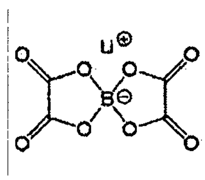 | 1.0 | 84.1 |
| Example 13 | | 0.5 | 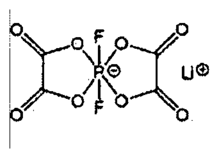 | 1.0 | 84.2 |
| Comparative Example 8 | - | - | - | - | 68.1 |

(continued)

| | Electrolyte solution | | | | Battery characteristics |
|---|---|---|---|---|---|
| | Compound of formula (2) | | Compound other than formula (2) | | Capacity retention rate (%) |
| | Structural formula | Parts by weight | Structural formula | Parts by weight | |
| Comparative Example 9 | - | - | $LiPO_2F_2$ | - | 78.1 |
| ※ Charge voltage before high-temperature storage test was set to 4.4 V. | | | | | |

As Table 5 shows, nonaqueous electrolyte solutions that contain the compound of formula (2) (Examples 10 to 13) result in a better high-temperature cycle capacity retention rate than instances where there is used nonaqueous electrolyte solution that does not contain the compound of formula (2) (Comparative Examples 8 and 9), in batteries that utilize a negative electrode such that the rhombohedral rate lies within the range of the present invention. The reason for the superior high-temperature storage capacity retention rate that is elicited is deemed to derive from the fact that the compound of formula (2) in the nonaqueous electrolyte solution forms, during charge and discharge, an effective coating film, capable of preventing impairment of battery characteristics,
on the surface of the negative electrode surface that uses a negative electrode active material having a specific rhombohedral rate.

<Examples 14 and 15, and Comparative Examples 10 to 14>

[Positive electrode]

A slurry was formed by mixing, in an N-methyl pyrrolidone solvent, 90 wt% of $LiNi_{1/3}Mn_{1/3}Co_{1/3}O_2$, as a positive electrode active material, 5 wt% of acetylene black, as a conductive material, and 5 wt% of polyvinylidene fluoride, as a binder. The obtained slurry was coated onto a 15 μm-thick aluminum foil, was dried, and was rolled using a press. The rolled product was cut and was used as the positive electrode.

[Production of a lithium secondary battery]

The same negative electrode as in Example 7 was used herein. In Example 14 and Comparative Examples 12 and 13 there was used the same base electrolyte solution as in Example 10. In Example 15 and Comparative Examples 10, 11 and 14 there was used the same base electrolyte solution as in Example 7. Next, sheet-like batteries were produced, in the same way as in Example 1, using these positive electrodes, negative electrodes and electrolyte solutions.

[Cycle characteristic evaluation]

Each battery having completed a running-in operation according to the same conditions as in Example 1, underwent one cycle of being charged at constant current, at 2 C, at 60°C, and being thereafter discharged, at constant current, at 2 C. This cycle was repeated over 300 cycles. The 300-th cycle capacity retention rate was worked out based on the calculation expression (300-th cycle discharge capacity)/(1st cycle discharge capacity) × 100. The evaluation results are given in Table 6.
[Table 6]

Table 6

| | Electrolyte solution | | | | | | |
|---|---|---|---|---|---|---|---|
| | Compound of formula (2) | | Compound other than formula (2), 1 | | Compound other than formula (2), 2 | | Capacity retentionrate (%) |
| | Structural formula | Parts by weight | Structural formula | Parts by weight | Structural formula | Parts by weight | |
| Example 14 | 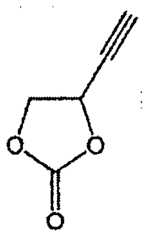 | 1.0 | - | - | - | - | 67.7 |
| Example 15 | 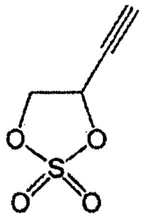 | 1.0 | 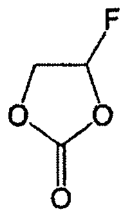 | 33.4 | - | - | 71.4 |
| Comparative Example 10 | - | - | | 33.4 | 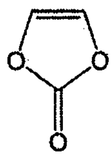 | 1.0 | 31.4 |
| Comparative Example 11 | - | - | | 33.4 | 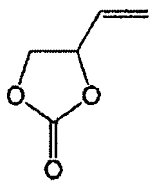 | 1.0 | 62.7 |
| Comparative Example 12 | - | - | - | - | | | 38.2 |
| Comparative Example 13 | - | - | - | - | 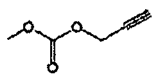 | 1.0 | 54.6 |
| Comparative Example 14 | - | - | 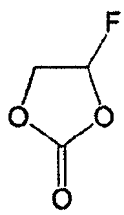 | 33.7 | - | - | 65.2 |
| ※ charge voltage during cycling was set to 4.6V, discharge voltage to 3.0 v. | | | | | | | |

As Table 6 shows, nonaqueous electrolyte solutions that contain the compound of formula (2) (Examples 14 and 15) result in a better high-temperature cycle capacity retention rate than instances where there is used nonaqueous electrolyte solution that does not contain the compound of formula (2) (Comparative Examples 10 and 14), in batteries that utilize a negative electrode such that the rhombohedral rate lies within the range of the present invention. The reason for the superior high-temperature storage capacity retention rate that is elicited is deemed to derive from the fact that

the compound of formula (2) in the nonaqueous electrolyte solution forms, during charge and discharge, an effective coating film, capable of preventing impairment of battery characteristics, on the surface of the negative electrode surface that uses a negative electrode active material having a specific rhombohedral rate.

INDUSTRIAL APPLICABILITY

The nonaqueous electrolyte secondary battery of the present invention, if combining the negative electrode and the nonaqueous electrolyte solution of the present invention, is useful in that the capacity retention rate remains high even after a durability test, namely a high-temperature storage test or a cycle test. As a result, the nonaqueous electrolyte secondary battery that uses the negative electrode active material and nonaqueous electrolyte solution of the present invention can be used in various known applications. Specific examples thereof include, for instance, notebook computers, pen-input PCs, mobile PCs, e-book players, mobile phones, portable fax machines, portable copiers, mobile printers, stereo headphones, video movies, LCD TVs, handy cleaners, portable CDs, Mini Discs, walkie-talkies, electronic organizers, calculators, memory cards, portable tape recorders, radios, back-up power supplies, motors, automobiles, motorcycles, mopeds, bicycles, lighting fixtures, toys, gaming devices, clocks, electric tools, strobes, cameras, power sources for load leveling, and power sources for natural energy storage.

## Claims

**1.** A nonaqueous electrolyte secondary battery that comprises a nonaqueous electrolyte solution that contains a lithium salt and a nonaqueous solvent that dissolves the lithium salt, a negative electrode capable of absorbing and releasing lithium ions, and a positive electrode,
wherein the negative electrode contains a negative electrode active material made up of graphite particles having a rhombohedral rate ranging from 0% to 35%, and the nonaqueous electrolyte solution contains a compound represented by formula (2):

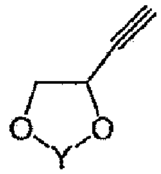
(2)

wherein Y represents a group selected from C=O, S=O, $S(=O)_2$, $P(=O)-R^2$ and $P(=O)-OR^3$; $R^2$ is a C1 to C20 saturated aliphatic hydrocarbon group; $R^3$ is Li, $NR^4_4$ or a C1 to C20 saturated aliphatic hydrocarbon group; and $R^4$ are mutually identical or different C1 to C20 saturated aliphatic hydrocarbon groups.

**2.** The nonaqueous electrolyte secondary battery according to claim 1, wherein an aspect ratio of the graphite particles ranges from 0.05 to 20.

**3.** The nonaqueous electrolyte secondary battery according to claim 1 or 2, wherein an interlayer distance d002 of the graphite particles ranges from 0.335 nm to 0.339 nm.

**4.** The nonaqueous electrolyte secondary battery according to any one of claims 1 to 3, wherein the graphite particles contain one or more types selected from the group consisting of graphite particles in which core graphite is covered with carbon, graphite particles in which core graphite is covered with graphite, and natural graphite particles.

**5.** The nonaqueous electrolyte secondary battery according to any one of claims 1 to 4, wherein the negative electrode includes a negative electrode active material that contains at least one type of a carbonaceous material having a Raman R value of 0.1 or greater, which is defined as the ratio of peak intensity at 1360 $cm^{-1}$ with respect to peak intensity at 1580 $cm^{-1}$ in argon-ion laser Raman spectroscopy.

**6.** The nonaqueous electrolyte secondary battery according to any one of claims 1 to 5, wherein the nonaqueous electrolyte solution contains a compound (A) represented by $Li\alpha XO_nF_m$ where X is any element of groups 13, 15 and 16 in the second or third period of the periodic table, and $\alpha$ = 1 to 2, n = 1 to 3, m = 1 to 2, together with the compound represented by formula (2).

7. The nonaqueous electrolyte secondary battery according to any one of claims 1 to 6, wherein the nonaqueous electrolyte solution contains a compound (B) represented by formula (3):

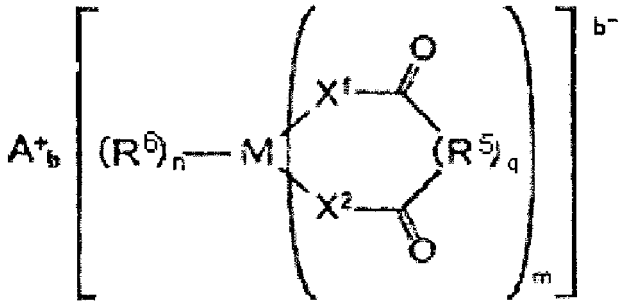

(3)

wherein A represents an alkali metal; M represents a transition metal or an element of groups 13, 14 or 15 of the periodic table; b ranges from 1 to 3, m ranges from 1 to 3, n ranges from 0 to 6, and q is 0 or 1; $R^5$ is a C1 to C10 alkylene, C1 to C10 halogenated alkylene, C6 to C20 arylene or C6 to C20 halogenated arylene wherein $R^5$ that are present in a number m may be bonded to each other; $R^6$ is a halogen, a C1 to C10 alkyl, C1 to C10 halogenated alkyl, C6 to C20 aryl, C6 to C20 halogenated aryl, or $X^3R^7$ wherein $R^6$ that are present in a number n may be bonded to each other to form a ring; $X^1$, $X^2$ and $X^3$ are O, S or $NR^8$; and $R^7$ and $R^8$ are each independently hydrogen, a C1 to C10 alkyl, C1 to C10 halogenated alkyl, C6 to C20 aryl or C6 to C20 halogenated aryl wherein $R^3$ and $R^8$ that are present in plurality may be bonded to each other to form a ring, together with the compound represented by formula (2).

8. The nonaqueous electrolyte secondary battery according to any one of claims 1 to 7, wherein the nonaqueous electrolyte solution contains a carbonate (C) having at least one of a carbon-carbon unsaturated bond and a fluorine atom.

## Patentansprüche

1. Sekundärbatterie mit nicht-wässrigem Elektrolyt, die eine nicht-wässrige Elektrolytlösung, die ein Lithiumsalz und ein nicht-wässriges Lösungsmittel enthält, das das Lithiumsalz löst, eine negative Elektrode, die geeignet ist, Lithiumionen zu absorbieren und freizusetzen, und eine positive Elektrode umfasst,
wobei die negative Elektrode ein Aktivmaterial der negativen Elektrode enthält, das aus Graphitpartikeln mit einem rhomboedrischen Anteil im Bereich von 0% bis 35% zusammengesetzt ist, und die nicht-wässrige Elektrolytlösung eine durch die folgende Formel (2) dargestellte Verbindung enthält:

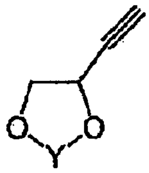

(2)

worin Y eine Gruppe, ausgewählt aus C=O, S=O, $S(=O)_2$, P(O=)-$R^2$ und P(=O)-$OR^3$, ist, $R^2$ eine gesättigte aliphatische $C_1$-$C_{20}$-Kohlenwasserstoffgruppe ist, $R^3$ Li, $NR^4_4$ oder eine gesättigte aliphatische $C_1$-$C_{20}$-Kohlenwasserstoffgruppe ist und $R^4$ einander identische oder verschiedene gesättigte aliphatische $C_1$-$C_{20}$-Kohlenwasserstoffgruppen sind.

2. Sekundärbatterie mit nicht-wässrigem Elektrolyt gemäß Anspruch 1, worin ein Aspektverhältnis der Graphitpartikel im Bereich von 0,05 bis 20 liegt.

3. Sekundärbatterie mit nicht-wässrigem Elektrolyt gemäß Anspruch 1 oder 2, worin ein Schichtabstand d002 der Graphitpartikel im Bereich von 0,335 nm bis 0,339 nm liegt.

4. Sekundärbatterie mit nicht-wässrigem Elektrolyt gemäß irgendeinem der Ansprüche 1 bis 3, worin die Graphitpartikel einen oder mehrere Typen, ausgewählt aus der Gruppe bestehend aus Graphitpartikeln, in denen Kerngraphit mit

Kohlenstoff bedeckt ist, Graphitpartikeln, in denen Kerngraphit mit Graphit bedeckt ist, und natürlichen Graphitpartikeln, enthalten.

5. Sekundärbatterie mit nicht-wässrigem Elektrolyt gemäß irgendeinem der Ansprüche 1 bis 4, worin die negative Elektrode ein Aktivmaterial der negativen Elektrode einschließt, das mindestens einen Typ eines kohlenstoffhaltigen Materials mit einem Raman-R-Wert von 0,1 oder größer enthält, der als das Verhältnis der Peakintensität bei 1360 $cm^{-1}$ in Bezug auf die Peakintensität bei 1580 $cm^{-1}$ in der Argon-Ionen-Laser-Ramanspektroskopie definiert ist.

6. Sekundärbatterie mit nicht-wässrigem Elektrolyt gemäß irgendeinem der Ansprüche 1 bis 5, worin die nicht-wässrige Elektrolytlösung eine durch $Li\alpha XO_nF_m$ dargestellte Verbindung (A), worin X ein Element der Gruppen 13, 15 und 16 in der zweiten oder dritten Periode des Periodensystems ist und $\alpha$ = 1 bis 2 ist, n = 1 bis 3 ist, m = 1 bis 2 ist, zusammen mit der durch Formel (2) dargestellten Verbindung enthält.

7. Sekundärbatterie mit nicht-wässrigem Elektrolyt gemäß irgendeinem der Ansprüche 1 bis 6, worin die nicht-wässrige Elektrolytlösung eine durch Formel (3) dargestellte Verbindung (B):

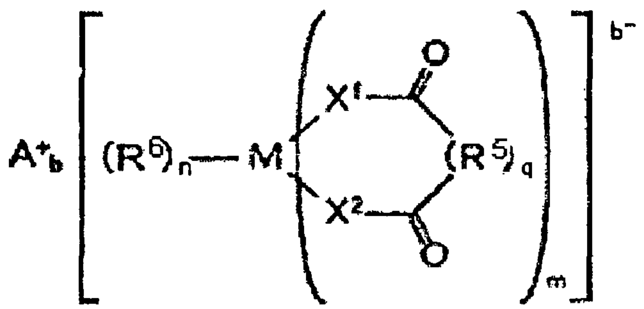
(3)

worin A ein Alkalimetall darstellt, M ein Übergangsmetall oder ein Element der Gruppen 13, 14 oder 15 des Periodensystem darstellt, b von 1 bis 3 reicht, m von 1 bis 3 reicht, n von 0 bis 6 reicht und q 0 oder 1 ist, $R^5$ ein $C_1$-$C_{10}$-Alkylen, halogeniertes $C_1$-$C_{10}$-Alkylen, $C_6$-$C_{20}$-Arylen oder halogeniertes $C_6$-$C_{20}$-Arylen ist, wobei $R^5$, die in einer Anzahl m vorliegen, miteinander verbunden sein können, $R^6$ ein Halogen, ein $C_1$-$C_{10}$-Alkyl, halogeniertes $C_1$-$C_{10}$-Alkyl, $C_6$-$C_{20}$-Aryl, halogeniertes $C_6$-$C_{20}$-Aryl oder $X^3R^7$ ist, worin $R^6$, die in einer Anzahl n vorliegen, miteinander zur Bildung eines Ringes verbunden sein können, $X^1$, $X^2$ und $X^3$ O, S oder $NR^8$ sind, und $R^7$ und $R^8$ jeweils unabhängig voneinander Wasserstoff, ein $C_1$-$C_{10}$-Alkyl, halogeniertes $C_1$-$C_{10}$-Alkyl, $C_6$-$C_{20}$-Aryl oder halogeniertes $C_6$-$C_{20}$-Aryl sind, worin $R^7$ und $R^8$, die in einer Vielzahl vorhanden sind, miteinander zur Bildung eines Rings verbunden sein können, zusammen mit der durch Formel (2) dargestellten Verbindung enthält.

8. Sekundärbatterie mit nicht-wässrigem Elektrolyt gemäß irgendeinem der Ansprüche 1 bis 7, worin die nicht-wässrige Elektrolytlösung ein Carbonat (C) mit mindestens einer ungesättigten Kohlenstoff-Kohlenstoff-Bindung und einem Fluoratom enthält.

## Revendications

1. Accumulateur secondaire à électrolyte non aqueux qui comprend une solution d'électrolyte non aqueux qui contient un sel de lithium et un solvant non aqueux qui dissout le sel de lithium, une électrode négative capable d'absorber et de libérer des ions lithium, et une électrode positive,
dans lequel l'électrode négative contient une matière active d'électrode négative constituée de particules de graphite ayant un taux de rhombohèdres allant de 0 % à 35 %, et la solution d'électrolyte non aqueux contient un composé représenté par la formule (2) :

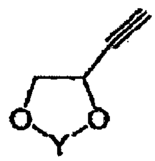
(2)

dans laquelle Y représente un groupe choisi parmi C=O, S=O, S $(O)_2$, P(=O)-$R^2$ et P(=O)-$OR^3$ ; $R^2$ est un groupe hydrocarboné aliphatique saturé en $C_1$ à $C_{20}$ ; $R^3$ est Li, $NR^4_4$ ou un groupe hydrocarboné aliphatique saturé en $C_1$ à $C_{20}$; et les $R^4$ sont des groupes hydrocarbonés aliphatiques saturés en $C_1$ à $C_{20}$ mutuellement identiques ou différents.

2. Accumulateur secondaire à électrolyte non aqueux selon la revendication 1, dans lequel un rapport de forme des particules de graphite se situe dans la plage de 0,05 à 20.

3. Accumulateur secondaire à électrolyte non aqueux selon la revendication 1 ou 2, dans lequel une distance intercouche d002 des particules de graphite se situe dans la plage de 0,335 nm à 0,339 nm.

4. Accumulateur secondaire à électrolyte non aqueux selon l'une quelconque des revendications 1 à 3, dans lequel les particules de graphite contiennent un ou plusieurs types choisis dans le groupe constitué des particules de graphite dans lesquelles le graphite du noyau est recouvert de carbone, des particules de graphite dans lesquelles le graphite du noyau est recouvert de graphite, et des particules de graphite naturel.

5. Accumulateur secondaire à électrolyte non aqueux selon l'une quelconque des revendications 1 à 4, dans lequel l'électrode négative comprend une matière active d'électrode négative qui contient au moins un type de matière carbonée ayant une valeur R de Raman de 0,1 ou plus, qui est définie comme étant le rapport de l'intensité du pic à 1 360 $cm^{-1}$ sur l'intensité du pic à 1 580 $cm^{-1}$ dans une spectroscopie laser aux ions argon de Raman.

6. Accumulateur secondaire à électrolyte non aqueux selon l'une quelconque des revendications 1 à 5, dans lequel la solution d'électrolyte non aqueux contient un composé (A) représenté par $Li_\alpha XO_nF_m$, où X est un élément quelconque des groupes 13, 15 et 16 de la deuxième ou de la troisième période du tableau périodique des éléments, et $\alpha$ = 1 à 2, n = 1 à 3, m = 1 à 2, conjointement avec le composé représenté par la formule (2).

7. Accumulateur secondaire à électrolyte non aqueux selon l'une quelconque des revendications 1 à 6, dans lequel la solution d'électrolyte non aqueux contient un composé (B) représenté par la formule (3) :

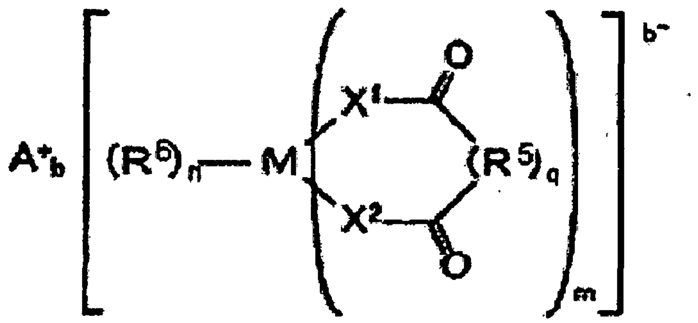

(3)

dans laquelle A représente un métal alcalin ; M représente un métal de transition ou un élément des groupes 13, 14 ou 15 du tableau périodique ; b est un nombre allant de 1 à 3, m est un nombre allant de 1 à 3, n est un nombre allant de 0 à 6, et q est un nombre égal à 0 ou 1 ; $R^5$ est un alkylène en $C_1$ à $C_{10}$, un alkylène halogéné en $C_1$ à $C_{10}$, un arylène en $C_6$ à $C_{20}$ ou un arylène halogéné en $C_6$ à $C_{20}$, dans laquelle les $R^5$ présents en un nombre m peuvent être liés les uns aux autres ; $R^6$ est un halogène, un alkyle en $C_1$ à $C_{10}$, un alkyle halogéné en $C_1$ à $C_{10}$, un aryle en $C_6$ à $C_{20}$ ou un aryle halogéné en $C_6$ à $C_{20}$, ou $X^3R^7$, dans laquelle les $R^6$ présents en un nombre n peuvent être liés les uns aux autres pour former un cycle ; $X^1$, $X^2$ et $X^3$ sont O, S ou $NR^8$ ; et $R^7$ et $R^8$ sont chacun indépendamment un hydrogène, un alkyle en $C_1$ à $C_{10}$, un alkyle halogéné en $C_1$ à $C_{10}$, un aryle en $C_6$ à $C_{20}$ ou un aryle halogéné en $C_6$ à $C_{20}$, dans laquelle les $R^7$ et $R^8$ présents en plusieurs occurrences peuvent être liés les uns aux autres pour former un cycle, conjointement avec le composé représenté par la formule (2).

8. Accumulateur secondaire à électrolyte non aqueux selon l'une quelconque des revendications 1 à 7, dans lequel la solution d'électrolyte non aqueux contient un carbonate (C) ayant au moins une liaison insaturée de carbone - carbone et un atome de fluor.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H845545 B
- JP H487156 B
- WO 2006077763 A
- US 6479191 A
- JP 2007242496 A
- US 2009053598 A
- EP 1758198 A
- JP 2002100399 A
- JP 2002124297 A
- JP 2002110234 A
- US 2006240329 A
- JP 2003100294 A
- JP 2000106183 A


### Non-patent literature cited in the description


- *Journal of Organic Cehmistry,* 1991, vol. 56 (3), 1083-1088
- *European Journal of Organic Chemistry,* 2009, 2836-2844